(19) Europäisches Patentamt
European Patent Office
Office européen des brevets

(11) EP 0 982 715 A1

(12) **EUROPEAN PATENT APPLICATION**

(43) Date of publication:
**01.03.2000 Bulletin 2000/09**

(51) Int Cl.[7]: **G11B 5/712**, C09C 1/22, C09C 3/00

(21) Application number: **99306773.5**

(22) Date of filing: **26.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.08.1998 JP 24393798**
**28.04.1999 JP 12149099**
**28.04.1999 JP 12149199**
**30.04.1999 JP 12511099**

(71) Applicant: **TODA KOGYO CORP.**
**Hiroshima-shi Hiroshima-ken (JP)**

(72) Inventors:
- **Hayashi, Kazuyuki**
  **Hiroshima-shi Hiroshima-ken (JP)**
- **Morii, Hiroko**
  **Hiroshima-shi, Hiroshima-ken (JP)**
- **Kamigaki, Mamoru**
  **Kure-shi, Hiroshima-ken (JP)**
- **Tanaka, Yasuyuki**
  **Onoda-shi, Yamaguchi-ken (JP)**
- **Iwasaki, Keisuke**
  **Hiroshima-shi, Hiroshima-ken (JP)**

(74) Representative: **Woods, Geoffrey Corlett**
**J.A. KEMP & CO.**
**Gray's Inn**
**14 South Square**
**London WC1R 5LX (GB)**

(54) **Black plate-shaped ferrite composite particles with magnetoplumbite structure and magnetic recording medium using the same**

(57) Black plate-shaped ferrite composite particles with magnetoplumbite structure having an average particle size of 0.01 to 0.2 µm of the present invention, comprise:

plate-shaped ferrite particles with magnetoplumbite structure;
a coating formed on surface of the plate-shaped ferrite particles with magnetoplumbite structure, comprising at least one of the organosilicon compounds.

(1) organosilane compounds obtained by drying or heat-treating an alkoxysilane compounds,
(2) polysiloxanes or modified polysiloxanes; or
(3) fluoroalkyl organosilane compounds obtained by drying or heat-treating a fluoroalkylsilane compounds; and

carbon black fine particles adhered to the coating, having a particle size of 0.002 to 0.05 µm, the amount of the carbon black fine particles adhered being 0.5 to 10 parts by weight based on 100 parts by weight of the plate-shaped ferrite particles with magnetoplumbite structure.

Such black plate-shaped ferrite composite particles with magnetoplumbite structure are excellent in dispersibility in a vehicle due to fewer carbon black fine particles having fallen off from the surface of each black magnetic composite particle, and have a high blackness and a low volume resistivity.

EP 0 982 715 A1

## Description

The present invention relates to black plate-shaped ferrite composite particles with magnetoplumbite structure and a magnetic recording medium using the black plate-shaped ferrite composite particles with magnetoplumbite structure. More particularly, the present invention relates to black plate-shaped ferrite composite particles with magnetoplumbite structure which are excellent in dispersibility in a vehicle due to less amount of carbon black fine particles fallen-off from the surface of each black plate-shaped ferrite composite particles with magnetoplumbite structure, and have a high blackness and a low volume resistivity, and a magnetic recording medium capable of not only showing a low light transmittance and a low surface resistivity even when the amount of carbon black fine particles added to a magnetic recording layer thereof is as small as possible, but also having a smooth surface, by using the black plate-shaped ferrite composite particles with magnetoplumbite structure.

With a development of miniaturized, lightweight video or audio magnetic recording and reproducing apparatuses for long-time recording, magnetic recording media such as a magnetic tape and magnetic disk have been increasingly and strongly desired to have a higher performance, namely, a higher recording density, higher output characteristic, in particular, an improved frequency characteristic and a lower noise level.

Especially, video tapes have recently been desired more and more to have a higher picture quality, and the frequencies of carrier signals recorded in recent video tapes are higher than those recorded in conventional video tapes. In other words, the signals in the short-wave region have come to be used, and as a result, the magnetization depth from the surface of a magnetic tape has come to be remarkably small.

In order to enhance output characteristics of magnetic recording media, especially an S/N ratio thereof with respect to signals having a short wavelength, there have been demanded fineness of magnetic particles, reduction in thickness of a magnetic recording layer, high dispersibility of magnetic particles and surface smoothness of a magnetic coating film.

In general, as magnetic particles having a high coercive force, there are known magnetic metal particles containing iron as a main component, plate-shaped ferrite particles with magnetoplumbite structure, or the like.

Since the above-mentioned plate-shaped ferrite particles with magnetoplumbite structure are a stable oxide compound, there have been a large demand thereof especially in the field of data tapes which are required to retain recorded information for a long period of time.

However, it is also known that due to the fact that the plate-shaped ferrite particles with magnetoplumbite structure are a stable oxide compound, electrons therewithin are less movable, thereby exhibiting a volume resistivity as high as not less than $1.0 \times 10^8$ Ω·cm. When such plate-shaped ferrite particles with magnetoplumbite structure are used as magnetic particles for magnetic recording media, there arises such a disadvantage that the surface resistivity of the obtained magnetic recording media becomes too high, especially more than $1.0 \times 10^{12}$ Ω/sq.

The magnetic recording media having such a high surface resistivity value cause problems such as attachment of cut chips, dusts or the like onto the surface thereof during the production process or upon use due to the increase in electrostatic charge amount, resulting in frequently generating drop-out. Therefore, in order to produce magnetic recording media whose surface resistivity value is reduced to not more than $10^{10}$ Ω/sq, it has been strongly demanded to provide plate-shaped ferrite particles with magnetoplumbite structure which have a volume resistivity value as low as possible.

On the other hand, at the present time, the end position of a magnetic recording medium such as magnetic tapes has been detected by sensing a high light transmittance portion of the magnetic recording medium by means of a video deck. In the case where the particle size of magnetic particles dispersed in the magnetic recording layer become finer and the thickness of the magnetic recording medium is reduced in order to meet the requirement for high performance of the magnetic recording medium as described hereinbefore, the magnetic recording medium shows a high light transmittance as a whole, so that it has been difficult to detect the end position thereof by means of the video deck. In order to solve this problem, carbon black fine particles have been added to the magnetic recording layer in an amount of usually about 6 to 12 parts by weight based on 100 parts by weight of the magnetic particles, thereby reducing the light transmittance of the magnetic recording medium. For this reason, in current videotapes, it is indispensable to add carbon black fine particles, etc., to the magnetic recording layer thereof.

When a large amount of carbon black fine particles are added to the magnetic recording layer, the obtained magnetic recording media can show not only a low light transmittance but also a low surface resistivity value, because the carbon black fine particles are conductive particles. However, since the carbon black fine particles are fine particles having an average particle size as small as about 0.002 to about 0.05 μm, and have a large BET specific surface area and a low solvent-wettability, it is difficult to disperse these particles in vehicles. For this reason, it also becomes difficult to produce magnetic recording media having a smooth surface. In addition, since the addition of the large amount of such carbon black fine particles becomes to increase in amount of non-magnetic components in the magnetic recording layer, the obtained magnetic recording media is deteriorated in signal recording properties, thereby obstructing not only high-density recording but also reduction in thickness of the magnetic recording layer.

Consequently, it has been required to provide plate-shaped ferrite particles with magnetoplumbite structure having an excellent blackness and a low volume resistivity value in order to obtain magnetic recording media which can exhibit a sufficiently low surface resistivity value and a sufficiently low light transmittance even when the amount of carbon black fine particles added to the magnetic recording layer is reduced to a level as low as possible, especially less than 6 parts by weight based on 100 parts by weight of magnetic particles.

Hitherto, as methods of reducing the surface resistivity value of magnetic recording media using the plate-shaped ferrite particles with magnetoplumbite structure, there are known a method of adding a large amount of carbon fine particles to the magnetic recording layer, and a method of lowering the volume resistivity value of the magnetic particles per se, as described hereinabove. As the method of lowering the volume resistivity value, there are known a method of incorporating $Fe^{2+}$ into plate-shaped hexagonal ferrite particles (Japanese Patent Application Laid-Open (KOKAI) Nos. 62-154228(1987) and 2-208821(1990), etc.), a method of depositing 2 to 20 % by weight of carbon onto the surfaces of particles by heat-treating plate-shaped hexagonal ferrite particles at a temperature of 100 to 450°C by a hydrogen gas stream and then treating the reduced particles under a carbon dioxide gas stream (Japanese Patent Application Laid-Open (KOKAI) No. 4-157615(1992), etc.), or the like.

At the present time, it has been most strongly demanded to provide plate-shaped ferrite particles with magnetoplumbite structure, which show an excellent blackness and a low volume resistivity value. However, such plate-shaped ferrite particles with magnetoplumbite structure, which can satisfy these properties have not been obtained yet.

That is, the above-mentioned $Fe^{2+}$-containing plate-shaped hexagonal ferrite particles show a low volume resistivity value. However, as shown in Comparative Examples hereinafter, since the plate-shaped hexagonal ferrite particles are unsatisfactory in blackness, magnetic recording media obtained by using these particles cannot show a sufficiently low light transmittance. In addition, because of the inclusion of $Fe^{2+}$, these particles are deteriorated in dispersibility in vehicles, so that it is difficult to obtain a magnetic recording layer having a smooth surface. Further, the plate-shaped hexagonal ferrite particles are deteriorated in oxidation stability, and tends to suffer from change in coercive force value with the passage of time due to the fact that $Fe^{2+}$ contained therein is readily oxidized into $Fe^{3+}$.

The above-mentioned carbon-deposited plate-shaped hexagonal ferrite particles exhibit an excellent blackness and a low volume resistivity value. However, because of the production process including heat-treating the plate-shaped hexagonal ferrite particles under a hydrogen gas stream, the obtained particles inevitably contain $Fe^{2+}$ as shown in Comparative Examples hereinafter. Accordingly, the carbon-deposited plate-shaped hexagonal ferrite particles also have the same defects as described above, i.e., suffer from change in coercive force value with the passage of time. In addition, since the adhesion force of carbon particles onto the surfaces of the plate-shaped hexagonal ferrite particles is weak, carbon particles tend to be desorbed or fallen-off therefrom when the particles are dispersed in vehicles. As a result, the dispersibility of the particles in vehicles is deteriorated, so that the obtained magnetic recording media show a large light transmittance and are unsatisfactory in surface smoothness as shown in Comparative Examples hereinafter.

As a result of the present inventors' earnest studies, it has been found that by coating on a surface of each plate-shaped ferrite particle with magnetoplumbite structure a coating comprising at least one organosilicon compound selected from the group consisting of:

(1) organosilane compounds obtained by drying or heat-treating an alkoxysilane compound,
(2) polysiloxanes or modified polysiloxanes, and
(3) fluoroalkyl organosilane compounds obtained by drying or heat-treating a fluoroalkylsilane compound, and

adhering to the surface of the coating carbon black fine particles having a particle size of 0.002 to 0.05 μm, the amount of said carbon black fine particles adhered being 0.5 to 10 parts by weight based on 100 parts by weight of said plate-shaped ferrite particles with magnetoplumbite structure,
the thus obtained black plate-shaped ferrite composite particles with magnetoplumbite structure, having an average particle size of 0.01 to 0.2 μm, are useful as magnetic particles for high-density magnetic recording media, because the black plate-shaped ferrite composite particles with magnetoplumbite structure can exhibit a high blackness and a low volume resistivity value without containing almost $Fe^{2+}$, and have an excellent dispersibility, thereby enabling the production of such magnetic recording media which show a low light transmittance and a low surface resistivity value even when the amount of carbon black fine particles added to the magnetic recording layer thereof is reduced to a level as low as possible, and which are excellent in surface smoothness. The present invention has been attained based on the finding.

It is an object of the present invention to provide plate-shaped ferrite particles with magnetoplumbite structure, which can exhibit a high blackness and a low volume resistivity value without containing $Fe^{2+}$ thereinto.

It is another object of the present invention to provide a magnetic recording medium capable of showing a low light transmittance, a low surface resistivity value and an excellent surface smoothness.

To accomplish the aims, in a first aspect of the present invention, there are provided black plate-shaped ferrite composite particles with magnetoplumbite structure, having an average particle size of 0.01 to 0.2 µm, comprising:

plate-shaped ferrite particles with magnetoplumbite structure;
a coating formed on surface of the plate-shaped ferrite particles with magnetoplumbite structure, comprising at least one organosilicon compound selected from the group consisting of:

(1) organosilane compounds obtained by drying or heat-treating an alkoxysilane compounds,
(2) polysiloxanes or modified polysiloxanes, and
(3) fluoroalkyl organosilane compounds obtained by drying or heat-treating a fluoroalkylsilane compounds; and

carbon black fine particles adhered on the coating, having a particle size of 0.002 to 0.05 µm,
the amount of the carbon black fine particles adhered being 0.5 to 10 parts by weight based on 100 parts by weight of the plate-shaped ferrite particles with magnetoplumbite structure.

In a second aspect of the present invention, there are black plate-shaped ferrite composite particles with magnetoplumbite structure, having an average particle size of 0.01 to 0.2 µm, comprising:

plate-shaped ferrite particles with magnetoplumbite structure;
a coat formed on at least a part of the surface of the black plate-shaped ferrite particles with magnetoplumbite structure, comprising at least one compound selected from the group consisting of hydroxides of aluminum, oxides of aluminum, hydroxides of silicon and oxides of silicon in an amount of 0.01 to 20 % by weight, calculated as Al or $SiO_2$, based on the total weight of the coated black plate-shaped ferrite particles with magnetoplumbite structure;
a coating formed on surface of the coat, comprising at least one organosilicon compound selected from the group consisting of:

(1) organosilane compounds obtained by drying or heat-treating an alkoxysilane compounds,
(2) polysiloxanes or modified polysiloxanes, and
(3) fluoroalkyl organosilane compounds obtained by drying or heat-treating a fluoroalkylsilane compounds; and

carbon black fine particles adhered on the coating, having a particle size of 0.002 to 0.05 µm,
the amount of the carbon black fine particles adhered being 0.5 to 10 parts by weight based on 100 parts by weight of the plate-shaped ferrite particles with magnetoplumbite structure.

In a third aspect of the present invention, there is provided a magnetic recording medium comprising:

a non-magnetic substrate; and
a magnetic recording layer comprising a binder resin and black plate-shaped ferrite composite particles with magnetoplumbite structure, having an average particle size of 0.01 to 0.2 µm, comprising:
plate-shaped ferrite particles with magnetoplumbite structure;
a coating formed on surface of the plate-shaped ferrite particles with magnetoplumbite structure, comprising at least one organosilicon compound selected from the group consisting of:

(1) organosilane compounds obtained by drying or heat-treating an alkoxysilane compounds,
(2) polysiloxanes or modified polysiloxanes, and
(3) fluoroalkyl organosilane compounds obtained by drying or heat-treating a fluoroalkylsilane compounds; and

carbon black fine particles adhered on the coating, having a particle size of 0.002 to 0.05 µm,
the amount of the carbon black fine particles adhered being 0.5 to 10 parts by weight based on 100 parts by weight of the plate-shaped ferrite particles with magnetoplumbite structure.

In a fourth aspect of the present invention, there is provided a magnetic recording medium comprising:

a non-magnetic substrate; and
a magnetic recording layer comprising a binder resin and black plate-shaped ferrite composite particles with magnetoplumbite structure, having an average particle size of 0.01 to 0.2 µm, comprising:
plate-shaped ferrite particles with magnetoplumbite structure;
a coat formed on at least a part of the surface of the black plate-shaped ferrite particles with magnetoplumbite

structure, comprising at least one compound selected from the group consisting of hydroxides of aluminum, oxides of aluminum, hydroxides of silicon and oxides of silicon in an amount of 0.01 to 20 % by weight, calculated as Al or $SiO_2$, based on the total weight of the coated black plate-shaped ferrite particles with magnetoplumbite structure; a coating formed on surface of the coat, comprising at least one organosilicon compound selected from the group consisting of:

(1) organosilane compounds obtained by drying or heat-treating an alkoxysilane compounds,
(2) polysiloxanes or modified polysiloxanes, and
(3) fluoroalkyl organosilane compounds obtained by drying or heat-treating a fluoroalkylsilane compounds; and

carbon black fine particles adhered on the coating, having a particle size of 0.002 to 0.05 μm,
the amount of the carbon black fine particles adhered being 0.5 to 10 parts by weight based on 100 parts by weight of the plate-shaped ferrite particles with magnetoplumbite structure.

First, the black plate-shaped ferrite composite particles with magnetoplumbite structure according to the present invention which are useful as magnetic particles for magnetic recording media, are explained.
The black plate-shaped ferrite composite particles with magnetoplumbite structure according to the present invention, have an average particle size of 0.01 to 0.2 μm and comprise plate-shaped ferrite particles with magnetoplumbite structure as core particles whose surfaces are successively coated with an organosilicon compound and then with carbon black fine particles having an average particle size of 0.002 to 0.05 μm.
As the plate-shaped ferrite particles with magnetoplumbite structure which are used as core particles in the present invention, there may be exemplified plate-shaped ferrite particles with magnetoplumbite structure, which contain Ba, Sr or both Ba and Sr; plate-shaped ferrite particles with magnetoplumbite structure which further contain, in addition to Ba and/or Sr, at least one coercive force-reducing agent selected from the group consisting of divalent or tetravalent metals such as Co, Ni, Zn, Mn, Mg, Ti, Nb, Cu, Zr, Mo and Sn; or the like.
The above-mentioned plate-shaped ferrite particles with magnetoplumbite structure used in the present invention, has a composition represented by the general formula:

$$AO\cdot n\{(Fe_{1-a}M_a)_2O_3\}$$

wherein A is Ba, Sr or Ba-Sr; M is at least one element selected from the group consisting of Co, Ni, Zn, Mn, Mg, Ti, Nb, Cu, Zr, Mo and Sn ; n is a number of 5.5 to 6.5; and a is a number of 0 to 0.5.
The average particle diameter (average plate diameter) of the plate-shaped ferrite particles with magnetoplumbite structure as core particles used in the present invention is usually 0.009 to 0.18 μm, preferably 0.019 to 0.18 μm, more preferably 0.027 to 0.18 μm.
When the average particle diameter of the plate-shaped ferrite particles with magnetoplumbite structure is more than 0.18 μm, the obtained black plate-shaped ferrite composite particles with magnetoplumbite structure also may become large particles. In the case where such large particles are used for forming a magnetic recording layer, the surface smoothness of the magnetic recording layer tends to be deteriorated. On the other hand, when the average particle size is less than 0.009 μm, the intermolecular force between the particles may be increased due to the reduction in particle size, so that agglomeration of the particles tends to be caused. Therefore, it becomes difficult to uniformly coat the surfaces of the plate-shaped ferrite particles with magnetoplumbite structure with the organosilicon compound, and to uniformly adhere the carbon black fine particles on the surface of the coating comprising the organosilicon compounds.
The average thickness of the plate-shaped ferrite particles with magnetoplumbite structure as core particles is preferably 0.0005 to 0.045 μm, more preferably 0.0009 to 0.045 μm, still more preferably 0.0014 to 0.045.
When the average thickness of the plate-shaped ferrite particles with magnetoplumbite structure is more than 0.045 μm, the obtained black plate-shaped ferrite composite particles with magnetoplumbite structure also may become large particles. In the case where such large particles are used for forming a magnetic recording layer, the surface smoothness of the magnetic recording layer may tend to be deteriorated. On the other hand, when the average thickness is less than 0.0005 μm, the intermolecular force between the particles may be increased due to the reduction in particle size, so that agglomeration of the particles may tend to be caused. Therefore, it may become difficult to uniformly coat the surfaces of the plate-shaped ferrite particles with magnetoplumbite structure with the organosilicon compound, and to uniformly adhere the carbon black fine particles on the surface of the coating comprising the organosilicon compounds.
The BET specific surface area of the plate-shaped ferrite particles with magnetoplumbite structure as core particles is preferably 30 to 200 $m^2/g$, more preferably 35 to 150 $m^2/g$, still more preferably 38 to 100 $m^2/$.

When the BET specific surface area of the plate-shaped ferrite particles with magnetoplumbite structure is less than 30 $m^2/g$, the obtained black plate-shaped ferrite composite particles with magnetoplumbite structure also may become large particles. In the case where such large particles are used for forming a magnetic recording layer, the surface smoothness of the magnetic recording layer may tend to be deteriorated. On the other hand, when the BET specific surface area is more than 200 $m^2/g$, the intermolecular force between the particles may be increased due to the reduction in particle size, so that agglomeration of the particles may tend to be caused. Therefore, it may become difficult to uniformly coat the surfaces of the plate-shaped ferrite particles with magnetoplumbite structure with the organosilicon compound, and to uniformly adhere the carbon black fine particles on the surface of the coating comprising the organosilicon compounds.

The plate-shaped ferrite particles with magnetoplumbite structure used in the present invention have a plate ratio (ratio of average particle size to average thickness; hereinafter referred to merely as "plate ratio") of preferably 2.0:1 to 20.0:1, more preferably 2.5:1 to 15.0:1, still more preferably 3.0:1 to 10.0:1. When the plate ratio is more than 20.0:1, the stacking between particles may be frequently caused, so that it may become difficult to uniformly coat the surfaces of the plate-shaped ferrite particles with magnetoplumbite structure with the organosilicon compound, and then uniformly adhere the carbon black fine particles thereon. On the other hand, when the plate ratio is less than 2.0:1, the film strength of the obtained magnetic recording media may be deteriorated.

The geometrical standard deviation value of the particle diameter (plate diameter) of the plate-shaped ferrite particles with magnetoplumbite structure as core particles used in the present invention is preferably not more than 1.7, more preferably not more than 1.6. When the geometrical standard deviation value thereof is more than 1.7, coarse particles may be contained therein, so that the plate-shaped ferrite particles with magnetoplumbite structure may be inhibited from being uniformly dispersed. Therefore, it also may become difficult to uniformly coat the surfaces of the plate-shaped ferrite particles with magnetoplumbite structure with the organosilicon compounds and to uniformly adhere the carbon black fine particles on the surface of the coating comprising the organosilicon compounds. The lower limit of the geometrical standard deviation value is 1.01. It is industrially difficult to obtain particles having a geometrical standard deviation value of less than 1.01.

The blackness of the plate-shaped ferrite particles with magnetoplumbite structure as core particles used in the present invention, is usually more than 18.0 when represented by L* value, and the upper limit thereof is preferably 34.0, more preferably 33.0 when represented by L* value. When the L* value exceeds 34.0, the lightness of the particles may be high, so that it is difficult to obtain black plate-shaped ferrite composite particles with magnetoplumbite structure having a sufficient blackness.

The volume resistivity of the plate-shaped ferrite particles with magnetoplumbite structure as core particles used in the present invention is usually not less than $1.0 \times 10^8$ $\Omega \cdot cm$. The upper limit thereof is usually about $1.0 \times 10^{10}$ $\Omega \cdot cm$.

As to the magnetic properties of the plate-shaped ferrite particles with magnetoplumbite structure as core particles used in the present invention, the coercive force value thereof is preferably 500 to 4,000 Oe, more preferably 650 to 4,000 Oe, the saturation magnetization value is preferably 40 to 70 emu/g, more preferably 45 to 70 emu/g.

The particle shape and particle size of the black plate-shaped ferrite composite particles with magnetoplumbite structure according to the present invention are considerably varied depending upon those of plate-shaped ferrite particles with magnetoplumbite structure as core particles. The black plate-shaped ferrite composite particles with magnetoplumbite structure have a similar particle shape to that of the plate-shaped ferrite particles with magnetoplumbite structure as core particle, and a slightly larger particle size than that of the plate-shaped ferrite particles with magnetoplumbite structure as core particles.

More specifically, the black plate-shaped ferrite composite particles with magnetoplumbite structure according to the present invention, have an average particle diameter (average plate diameter) of usually 0.01 to 0.2 μm.

When the average particle size of the black plate-shaped ferrite composite particles with magnetoplumbite structure is more than 0.2 μm, the black plate-shaped ferrite composite particles with magnetoplumbite structure may become coarse and as a result, the obtained coating film may become to be deteriorated in surface smooth. On the other hand, when the average particle size thereof is less than 0.01 μm, the black plate-shaped ferrite composite particles with magnetoplumbite structure tends to be agglomerated by the increase of intermolecular force due to the reduction in particle size, thereby deteriorating the dispersibility in a vehicle upon production of the magnetic coating composition. In the consideration of the surface smoothness of the obtained coating film and the dispersibility in vehicles upon the production of magnetic coating compositions, the average particle size of the black plate-shaped ferrite composite particles with magnetoplumbite structure is preferably 0.02 to 0.2 μm, more preferably 0.03 to 0.2 μm.

The black plate-shaped ferrite composite particles with magnetoplumbite structure according to the present invention, have a thickness of usually 0.0005 to 0.05 μm.

When the average thickness of the black plate-shaped ferrite composite particles with magnetoplumbite structure is more than 0.05 μm, the black plate-shaped ferrite composite particles with magnetoplumbite structure may become coarse and as a result, the obtained coating film may become to be deteriorated in surface smooth. On the

other hand, when the average thickness thereof is less than 0.0005 µm, the black plate-shaped ferrite composite particles with magnetoplumbite structure may tend to be agglomerated by the increase of intermolecular force due to the reduction in particle size, thereby deteriorating the dispersibility in a vehicle upon production of the magnetic coating composition. In the consideration of the surface smoothness of the obtained coating film and the dispersibility in vehicles upon the production of magnetic coating compositions, the average thickness of the black plate-shaped ferrite composite particles with magnetoplumbite structure is preferably 0.001 to 0.05 µm, more preferably 0.0015 to 0.05 µm.

The black plate-shaped ferrite composite particles with magnetoplumbite structure according to the present invention, have a plate ratio of usually 2.0:1 to 20.0:1.

When the plate ratio of the black plate-shaped ferrite composite particles with magnetoplumbite structure is more than 20.0:1, the black plate-shaped ferrite composite particles with magnetoplumbite structure may tend to be frequently stacking between particles. As a result, upon the production of a magnetic coating composition, there is tendency that the dispersibility of the particles in vehicle is deteriorated and the viscosity of the obtained magnetic coating composition is increased. On the other hand, when the average thickness thereof is less than 2.0:1, the strength of the coating film of the obtained magnetic recording medium is low. In the consideration of the film strength of the obtained magnetic recording media and the dispersibility in vehicles upon the production of magnetic coating compositions, the plate ratio is preferably 2.5:1 to 15.0:1, more preferably 3.0:1 to 10.0:1.

The BET specific surface area of the black plate-shaped ferrite composite particles with magnetoplumbite structure according to the present invention, is preferably 30 to 200 $m^2/g$, more preferably 35 to 150 $m^2/g$, still more preferably 38 to 100 $m^2/g$. When the BET specific surface area thereof is less than 30 $m^2/g$, the black plate-shaped ferrite composite particles with magnetoplumbite structure may become coarse, and the sintering between the black plate-shaped ferrite composite particles with magnetoplumbite structure may be caused, thereby deteriorating the surface smooth of the magnetic recording layer. On the other hand, when the BET specific surface area is more than 200 $m^2/g$, the black plate-shaped ferrite composite particles with magnetoplumbite structure may tend to be agglomerated together by the increase in intermolecular force due to the reduction in particle size, thereby deteriorating the dispersibility in the vehicle upon production of the magnetic coating composition.

The geometrical standard deviation value of the black plate-shaped ferrite composite particles with magnetoplumbite structure according to the present invention is preferably not more than 1.7. When the geometrical standard deviation value thereof is more than 1.7, the surface smooth of the magnetic recording layer of the magnetic recording medium may be likely to be deteriorated due to the existence of coarse particles therein. With the consideration of the surface smooth of the magnetic recording layer, the geometrical standard deviation value thereof is more preferably not more than 1.6, still more preferably not more than 1.5. In the consideration of the industrial productivity, the lower limit of the geometrical standard deviation value thereof is preferably 1.01. It is industrially difficult to obtain such particles having a geometrical standard deviation of less than 1.01.

The volume resistivity of the black plate-shaped ferrite composite particles with magnetoplumbite structure is preferably less than $1.0 \times 10^8$ Ω·cm, more preferably $1.0 \times 10^5$ to $5.0 \times 10^7$ Ω·cm, still more preferably $1.0 \times 10^5$ to $1.0 \times 10^7$ Ω·cm. When the volume resistivity of the black plate-shaped ferrite composite particles with magnetoplumbite structure is not less than $1.0 \times 10^8$ Ω·cm, it may be difficult to sufficiently reduce the surface resistivity of the obtained magnetic recording medium.

As to the blackness of the black plate-shaped ferrite composite particles with magnetoplumbite structure according to the present invention, the upper limit of the blackness thereof is usually 27.0, preferably 26.0, more preferably 25.0 when represented by L* value. When the L* value thereof is more than 27.0, the lightness of the black plate-shaped ferrite composite particles with magnetoplumbite structure becomes high, so that the blackness of the black plate-shaped ferrite composite particles with magnetoplumbite structure is insufficient. The lower limit of the blackness thereof is 15 when represented by L* value.

The percentage of desorption of carbon black fine particles from the black plate-shaped ferrite composite particles with magnetoplumbite structure according to the present invention, is preferably not more than 20 %, more preferably not more than 10 %. When the desorption percentage of the carbon black fine particles is more than 20 %, the desorbed carbon black fine particles may tend to hinder the black plate-shaped ferrite composite particles with magnetoplumbite structure from being uniformly dispersed in the vehicle upon production of the magnetic coating composition.

The black plate-shaped ferrite composite particles with magnetoplumbite structure, have a ratio of $Fe^{2+}$ to $Fe^{3+}$ (hereinafter referred to merely as "$Fe^{2+}/Fe^{3+}$ ratio") of usually not more than 0.01:1, preferably not more than 0.005:1. When the $Fe^{2+}/Fe^{3+}$ ratio is more than 0.01:1, since $Fe^{2+}$ tends to be oxidized into $Fe^{3+}$, the coercive force value of the black plate-shaped ferrite composite particles with magnetoplumbite structure tends to vary with the passage of time. The lower limit of the $Fe^{2+}/Fe^{3+}$ is zero (0).

As the magnetic properties of the black plate-shaped ferrite composite particles with magnetoplumbite structure according to the present invention, the coercive force of the black plate-shaped ferrite composite particles with magnetoplumbite structure is preferably 500 to 4,000 Oe, more preferably 650 to 4,000 Oe, the saturation magnetization

thereof is preferably 40 to 70 emu/g, more preferably 45 to 70 emu/g.

The percentage of change in coercive force value of the black plate-shaped ferrite composite particles with magnetoplumbite structure is preferably not more than 3 %, more preferably not more than 2 %.

The coating formed on the surface of the core particle comprises at least one organosilicon compound selected from the group consisting of (1) organosilane compounds obtained by drying or heat-treating alkoxysilane compounds; (2) polysiloxanes, or modified polysiloxanes selected from the group consisting of (2-A) polysiloxanes modified with at least one compound selected from the group consisting of polyethers, polyesters and epoxy compounds (hereinafter referred to merely as "modified polysiloxanes"), and (2-B) polysiloxanes whose molecular terminal is modified with at least one group selected from the group consisting of carboxylic acid groups, alcohol groups and a hydroxyl group (hereinafter referred to merely as "terminal-modified polysiloxanes"); and (3) fluoroalkyl organosilane compounds obtained by drying or heat-treating fluoroalkylsilane compounds.

The organosilane compounds (1) can be produced by drying or heat-treating alkoxysilane compounds represented by the formula (I):

$$R^1{}_aSiX_{4-a} \qquad (I)$$

wherein $R^1$ is $C_6H_5$-, $(CH_3)_2CHCH_2$- or n-$C_bH_{2b+1}$- (wherein b is an integer of 1 to 18); X is $CH_3O$- or $C_2H_5O$-; and a is an integer of 0 to 3.

The drying or heat-treatment of the alkoxysilane compounds is conducted, for example, at a temperature of usually 40 to 200°C, preferably 60 to 150°C for usually 10 minutes to 12 hours, preferably 30 minutes to 3 hours.

Specific examples of the alkoxysilane compounds may include methyl triethoxysilane, dimethyl diethoxysilane, tetraethoxysilane, phenyl triethyoxysilane, diphenyl diethoxysilane, methyl trimethoxysilane, dimethyl dimethoxysilane, tetramethoxysilane, phenyl trimethoxysilane, diphenyl dimethoxysilane, isobutyl trimethoxysilane, decyl trimethoxysilane or the like. Among these alkoxysilane compounds, in view of the desorption percentage and the adhering effect of carbon black fine particles, methyl triethoxysilane, phenyl triethyoxysilane, methyl trimethoxysilane, dimethyl dimethoxysilane and isobutyl trimethoxysilane are preferred, and methyl triethoxysilane and methyl trimethoxysilane are more preferred.

As the polysiloxanes (2), there may be used those compounds represented by the formula (II):

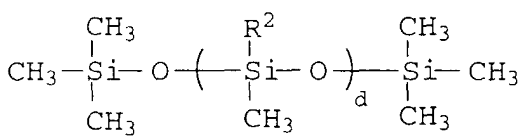

(II)

wherein $R^2$ is H- or $CH_3$-, and d is an integer of 15 to 450.

Among these polysiloxanes, in view of the desorption percentage and the adhering effect of carbon black fine particles, polysiloxanes having methyl hydrogen siloxane units are preferred.

As the modified polysiloxanes (2-A), there may be used:

(a) polysiloxanes modified with polyethers represented by the formula (III):

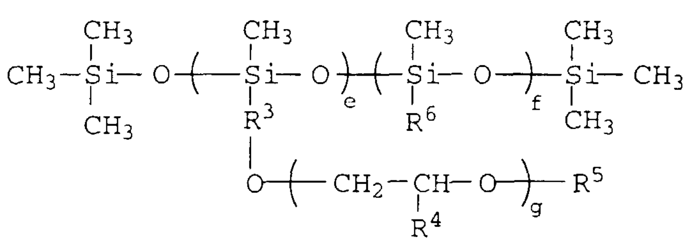

(III)

wherein $R^3$ is $-(-CH_2-)_h-$; $R^4$ is $-(-CH_2-)_i-CH_3$; $R^5$ is -OH, -COOH, $-CH=CH_2$, $-C(CH_3)=CH_2$ or $-(-CH_2-)_j-CH_3$; $R^6$ is

$-(-CH_2-)_k-CH_3$; g and h are an integer of 1 to 15; i, j and k are an integer of 0 to 15; e is an integer of 1 to 50; and f is an integer of 1 to 300;

(b) polysiloxanes modified with polyesters represented by the formula (IV):

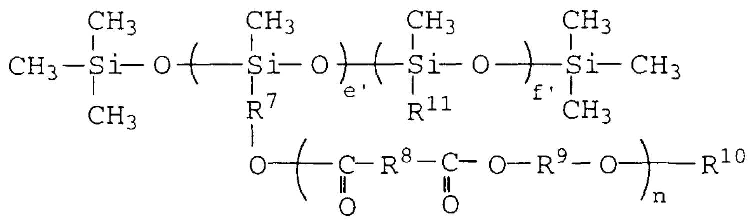

(IV)

wherein $R^7$, $R^8$ and $R^9$ are $-(-CH_2-)_q-$ and may be the same or different; $R^{10}$ is -OH, -COOH, $-CH=CH_2$, $-C(CH_3)=CH_2$ or $-(-CH_2-)_r-CH_3$; $R^{11}$ is $-(-CH_2-)_s-CH_3$; n and q are an integer of 1 to 15; r and s are an integer of 0 to 15; e' is an integer of 1 to 50; and f' is an integer of 1 to 300;

(c) polysiloxanes modified with epoxy compounds represented by the formula (V):

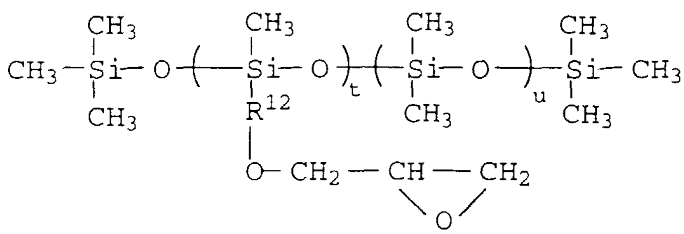

(V)

wherein $R^{12}$ is $-(-CH_2-)_v-$; v is an integer of 1 to 15; t is an integer of 1 to 50; and u is an integer of 1 to 300; or a mixture thereof.

Among these modified polysiloxanes (2-A), in view of the desorption percentage and the adhering effect of carbon black fine particles, the polysiloxanes modified with the polyethers represented by the formula (III), are preferred.

As the terminal-modified polysiloxanes (2-B), there may be used those represented by the formula (VI):

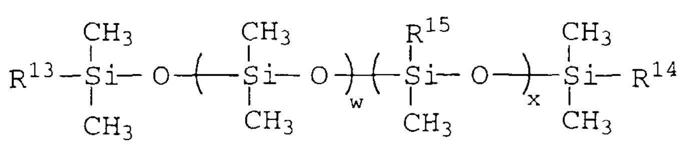

(VI)

wherein $R^{13}$ and $R^{14}$ are -OH, $R^{16}OH$ or $R^{17}COOH$ and may be the same or different; $R^{15}$ is $-CH_3$ or $-C_6H_5$; $R^{16}$ and $R^{17}$ are $-(-CH_2-)_y-$; y is an integer of 1 to 15; w is an integer of 1 to 200; and x is an integer of 0 to 100.

Among these terminal-modified polysiloxanes, in view of the desorption percentage and the adhering effect of carbon black fine particles, the polysiloxanes whose terminals are modified with carboxylic acid groups are preferred.

The fluoroalkyl organosilane compounds (3) may be produced by drying or heat-treating fluoroalkylsilane compounds represented by the formula (VII):

$$CF_3(CF_2)_zCH_2CH_2(R^{18})_{a'}SiX_{4-a'} \qquad \text{(VII)}$$

wherein $R^{18}$ is $CH_3$-, $C_2H_5$-, $CH_3O$- or $C_2H_5O$-; X is $CH_3O$- or $C_2H_5O$-; and z is an integer of 0 to 15; and a' is an integer of 0 to 3.

The drying or the heat-treatment of the fluoroalkylsilane compounds may be conducted, for example, at a

temperature of usually 40 to 200°C, preferably 60 to 150°C for usually 10 minutes to 12 hours, preferably 30 minutes to 3 hours.

Specific examples of the fluoroalkylsilane compounds may include trifluoropropyl trimethoxysilane, tridecafluorooctyl trimethoxysilane, heptadecafluorodecyl trimethoxysilane, heptadecafluorodecylmethyl dimethoxysilane, trifluoropropyl triethoxysilane, tridecafluorooctyl triethoxysilane, heptadecafluorodecyl triethoxysilane, heptadecafluorodecylmethyl diethoxysilane or the like. Among these fluoroalkylsilane compounds, in view of the desorption percentage and the adhering effect of carbon black fine particles, trifluoropropyl trimethoxysilane, tridecafluorooctyl trimethoxysilane and heptadecafluorodecyl trimethoxysilane are preferred, and trifluoropropyl trimethoxysilane and tridecafluorooctyl trimethoxysilane are more preferred.

The coating amount of the organosilicon compounds is usually 0.02 to 5.0 % by weight, preferably 0.03 to 4.0 % by weight, more preferably 0.05 to 3.0 % by weight (calculated as Si) based on the weight of the plate-shaped ferrite particles with magnetoplumbite structure coated with the organosilicon compounds.

When the coating amount of the organosilicon compounds is less than 0.02 % by weight, it becomes difficult to adhere the carbon black fine particles on the surfaces of the plate-shaped ferrite particles with magnetoplumbite structure in such an amount enough to improve the blackness of the obtained black plate-shaped ferrite composite particles with magnetoplumbite structure.

On the other hand, when the coating amount of the organosilicon compounds is more than 5.0 % by weight, a sufficient amount of the carbon black fine particles can be adhered on the surfaces of the plate-shaped ferrite particles with magnetoplumbite structure. However, the use of such unnecessarily large amount of the organosilicon compounds is meaningless because the effect of enhancing the blackness of the obtained black plate-shaped ferrite composite particles with magnetoplumbite structure is already saturated.

As the carbon black fine particles used in the black plate-shaped ferrite composite particles with magnetoplumbite structure according to the present invention, there may be exemplified commercially available carbon black particles such as furnace black, channel black or the like. Specific examples of the commercially available carbon black particles usable in the present invention, may include MA100, MA7, #1000, #2400B, #30, MA8, MAll, #50, #52, #45, #2200B, #3150, #3250, MA600, etc. (tradenames; produced by Mitsubishi Chemical Corp.), Seast9H, Seast7H, Seast6, Seast3H, Seast300, SeastFM, etc. (tradenames; produced by Tokai Carbon Co., Ltd.) or the like. In the consideration of compatibility with the organosilicon compounds, MA100, MA7, #1000, #2400B and #30 are preferred. Further, in the consideration of the volume resistivity of the black plate-shaped ferrite composite particles with magnetoplumbite structure, #3150 and #3250 are more preferred.

The average particle size of the carbon black fine particles is usually about 0.002 to about 0.05 µm, preferably about 0.002 to about 0.035 µm.

When the average particle size of the carbon black fine particles is less than 0.002 µm, the carbon black fine particles are too fine to be well handled.

On the other hand, when the average particle size of the carbon black fine particles is more than 0.05 µm, the particle size of the carbon black fine particles becomes much larger than that of the plate-shaped ferrite particles with magnetoplumbite structure as core particles, thereby causing insufficient adhesion of the carbon black fine particles onto the coating composed of the organosilicon compounds, and increasing the desorption percentage of the carbon black fine particles. As a result, the obtained black plate-shaped ferrite composite particles with magnetoplumbite structure tend to be deteriorated in dispersibility in a vehicle upon the production of magnetic coating composition.

The ratio of the average particle size of the plate-shaped ferrite particles with magnetoplumbite structure to that of the carbon black fine particles is preferably not less than 2:1. When the ratio is less than 2:1, the particle size of the carbon black fine particles becomes considerably larger as compared to that of the plate-shaped ferrite particles with magnetoplumbite structure as core particles, thereby causing insufficient adhesion of the carbon black fine particles onto the coat composed of the organosilicon compounds, and increasing the desorption percentage of the carbon black fine particles. As a result, the obtained black plate-shaped ferrite composite particles with magnetoplumbite structure tend to be deteriorated in dispersibility in a vehicle upon the production of magnetic coating composition.

The amount of the carbon black fine particles adhered is usually 0.5 to 10 parts by weight based on 100 parts by weight of the plate-shaped ferrite particles with magnetoplumbite structure as core particles.

When the amount of the carbon black fine particles adhered is less than 0.5 part by weight, the amount of the carbon black fine particles adhered may be insufficient, so that it becomes difficult to obtain black plate-shaped ferrite composite particles with magnetoplumbite structure having a sufficient blackness.

On the other hand, when the amount of the carbon black fine particles adhered is more than 10 parts by weight, the obtained black plate-shaped ferrite composite particles with magnetoplumbite structure can show a sufficient blackness. However, since the amount of the carbon black fine particles adhered is considerably large, the carbon black fine particles tend to be desorbed from the coating composed of the organosilicon compound. As a result, the obtained black plate-shaped ferrite composite particles with magnetoplumbite structure tend to be deteriorated in dispersibility in a vehicle upon the production of magnetic coating composition.

At least a part of the surface of the plate-shaped ferrite particles with magnetoplumbite structure as a core particle used in the present invention may be coated with at least one selected from the group consisting of a hydroxide of aluminum, an oxide of aluminum, a hydroxide of silicon and an oxide of silicon. When the black plate-shaped ferrite composite particles with magnetoplumbite structure obtained by using as core particles the plate-shaped ferrite particles with magnetoplumbite structure which are coated with the above-described coating material, are dispersed in a vehicle, since the treated particles have an affinity with the binder resin, it is more easy to obtain a desired dispersibility.

The amount of the hydroxide of aluminum, the oxide of aluminum, the hydroxide of silicon or the oxide of silicon used as the coating material is usually not more than 20 % by weight, preferably 0.01 to 20 % by weight, more preferably 0.05 to 10 % by weight (calculated as Al and/or $SiO_2$) based on the total weight of the coated plate-shaped ferrite particles with magnetoplumbite structure. If it is less than 0.01 % by weight (calculated as Al and/or $SiO_2$) based on the total weight of the coated plate-shaped ferrite particles with magnetoplumbite structure, the dispersibility-improving effect by coating therewith may be insufficient. If the amount exceeds 20 % by weight (calculated as A1 and/or $SiO_2$) based on the total weight of the coated plate-shaped ferrite particles with magnetoplumbite structure, the dispersibility-improving effect by coating therewith becomes saturated, so that it is meaningless to add a coating material more than necessary.

The black plate-shaped ferrite composite particles with magnetoplumbite structure according to the present invention wherein the plate-shaped ferrite particles with magnetoplumbite structure which are coated with at least one selected from the group consisting of a hydroxide of aluminum, an oxide of aluminum, a hydroxide of silicon and an oxide of silicon are used as core particles, are substantially identical in particle size, geometrical standard deviation, BET specific surface area value, volume resistivity value, blackness L* value, magnetic properties, desorption percentage of carbon black fine particles, $Fe^{2+}/Fe^{3+}$ and percentage of change in coercive force value with the passage of time, to those of the black plate-shaped ferrite composite particles with magnetoplumbite structure according to the present invention which are uncoated with the hydroxide and/or oxide of aluminum and/or silicon.

Next, the magnetic recording medium according to the present invention is described.

The magnetic recording medium according to the present invention comprises:

a non-magnetic substrate; and
a magnetic recording layer formed on the non-magnetic substrate, comprising a binder resin and the black plate-shaped ferrite composite particles with magnetoplumbite structure.

As the non-magnetic base film, the following materials which are at present generally used for the production of a magnetic recording medium may be used: a synthetic resin such as polyethylene terephthalate, polyethylene, polypropylene, polycarbonate, polyethylene naphthalate, polyamide, polyamideimide and polyimide; foil and plate of a metal such as aluminum and stainless steel; and various kinds of paper. The thickness of the non-magnetic base film varies depending upon the material, but it is usually about 1.0 to 300 μm, preferably 2.0 to 200 μm.

In the case of a magnetic disc, polyethylene terephthalate is usually used as the non-magnetic base film, and the thickness thereof is usually 50 to 300 μm, preferably 60 to 200 μm. In a magnetic tape, when polyethylene terephthalate is used as the non-magnetic base film, the thickness thereof is usually 3 to 100 μm, preferably 4 to 20 μm; when polyethylene naphthalate is used, the thickness thereof is usually 3 to 50 μm, preferably 4 to 20 μm; and when polyamide is used, the thickness thereof is usually 2 to 10 μm, preferably 3 to 7 μm.

As the binder resin used in the present invention, the following resins which are at present generally used for the production of a magnetic recording medium may be used: vinyl chloride-vinyl acetate copolymer, urethane resin, vinyl chloride-vinyl acetate-maleic acid copolymer, urethane elastomer, butadiene-acrylonitrile copolymer, polyvinyl butyral, cellulose derivative such as nitrocellulose, polyester resin, synthetic rubber resin such as polybutadiene, epoxy resin, polyamide resin, polyisocyanate, electron radiation curing acryl urethane resin and mixtures thereof.

Each of these resin binders may contain a functional group such as -OH, -COOH, $-SO_3M$, $-OPO_2M_2$ and $-NH_2$, wherein M represents H, Na or K. With the consideration of the dispersibility of the black plate-shaped ferrite composite particles with magnetoplumbite structure, a binder resin containing a functional group -COOH or $-SO_3M$ is preferable.

The thickness of the magnetic recording layer obtained by applying the magnetic coating composition on the surface of the non-magnetic substrate and dried, is usually in the range of 0.01 to 5.0 μm. If the thickness is less than 0.01 μm, uniform coating may be difficult, so that unfavorable phenomenon such as unevenness on the coating surface is observed. On the other hand, when the thickness exceeds 5.0 μm, it may be difficult to obtain desired signal recording property due to an influence of diamagnetism. The preferable thickness is in the range of 0.1 to 4.0 μm.

The mixing amount of the black plate-shaped ferrite composite particles with magnetoplumbite structure to the binder resin is usually 5 to 2000 parts by weight, preferably 100 to 1000 parts by weight based on 100 parts by weight of the binder resin.

When the amount of the black plate-shaped ferrite composite particles with magnetoplumbite structure blended is less than 5 parts by weight, the obtained magnetic coating composition contains a too small amount of the black plate-shaped ferrite composite particles with magnetoplumbite structure. As a result, when a coating film is produced from such a magnetic coating composition, it is not possible to obtain a coating film in which the black plate-shaped ferrite composite particles with magnetoplumbite structure are continuously dispersed, so that the surface smoothness and the strength of the coating film become unsatisfactory. On the other hand, when the amount of the black plate-shaped ferrite composite particles with magnetoplumbite structure blended is more than 2,000 parts by weight, the amount of the black plate-shaped ferrite composite particles with magnetoplumbite structure becomes too large relative to that of the binder resin, so that it is not possible to sufficiently disperse the black plate-shaped ferrite composite particles with magnetoplumbite structure in the magnetic coating composition. As a result, when a coating film is produced from such a magnetic coating composition, it is difficult to obtain a coating film having a sufficiently smooth surface. Further, since the black plate-shaped ferrite composite particles with magnetoplumbite structure cannot be sufficiently bound with each other by the binder resin, the obtained coating film tends to become brittle.

In the magnetic recording medium according to the present invention, the amount of carbon black fine particles added to the magnetic recording layer thereof can be reduced to usually less than 6 parts by weight, preferably less than 5 parts by weight, more preferably less than 3 parts by weight based on 100 parts by weight of the black plate-shaped ferrite composite particles with magnetoplumbite structure.

Further, in the case where the black plate-shaped ferrite composite particles with magnetoplumbite structure wherein the particle size thereof is large and a large amount of the carbon black fine particles can be adhered onto the surface thereof, especially in an amount of 7 to 10 parts by weight based on 100 parts by weight of the plate-shaped ferrite particles with magnetoplumbite structure, are used as magnetic particles, it can be expected to omit the addition of the carbon black fine particles to the magnetic recording layer.

Incidentally, the magnetic recording layer may optionally contain a lubricant, an abrasive, an anti-static agent and other additives which are usually used for the production of magnetic recording media, in an amount of 0.1 to 50 parts by weight based on 100 parts of the binder resin.

In the magnetic recording medium according to the present invention, at least one non-magnetic undercoat layer comprising a binder resin and non-magnetic particles such as hematite particles or the like may be sandwiched between the non-magnetic base film and the magnetic coating film. As the binder resin used therein, resins which are at present generally used for the production of a magnetic recording medium may be used. The mixing ratio of the non-magnetic particles with the binder resin is usually 5 to 2000 parts by weight, preferably 100 to 1000 parts by weight based on 100 parts by weight of the binder resin. The thickness of the non-magnetic undercoat layer obtained by applying a non-magnetic coating composition comprising the binder resin, an solvent and the non-magnetic particles, on the surface of the non-magnetic base film and drying, is usually 0.2 to 10.0 μm, preferably 0.5 to 5.0 μm. Further, it is possible to add a lubricant, a polishing agent, an antistatic agent, etc. which are generally used for the production of a magnetic recording medium to the non-magnetic undercoat layer.

The magnetic recording medium having the non-magnetic undercoat layer according to the present invention, can be more improved in a light transmittance, a smooth surface and a strength of the coating film.

The magnetic recording medium according to the present invention has a coercive force of usually 500 to 4,000 Oe; a squareness (residual magnetic flux density Br/saturation magnetic flux density Bm) of usually 0.82 to 0.95; a gloss (of the coating film) of usually 165 to 300 %; a linear adsorption coefficient (of the coating film) of usually 1.20 to 10.0 $\mu m^{-1}$; a surface roughness Ra (of the coating film) of usually not more than 12.0 nm; a surface resistivity of not more than $1.0 \times 10^{10}$ Ω/sq; and a Young's modulus (relative value to a commercially available video tape: AV T-120 produced by Victor Company of Japan, Limited) of usually 124 to 160.

In case of using the black plate-shaped ferrite composite particles with magnetoplumbite structure as magnetic particles, wherein the plate-shaped ferrite particles with magnetoplumbite structure which are uncoated with the hydroxides and/or oxides of aluminum and/or silicon, are used as core particles, the magnetic recording medium according to the present invention has a coercive force of usually 500 to 4,000 Oe, preferably 650 to 4,000 Oe; a squareness (residual magnetic flux density Br/saturation magnetic flux density Bm) of usually 0.82 to 0.95, preferably 0.83 to 0.95; a gloss (of the coating film) of usually 165 to 300 %, preferably 170 to 300 %; a linear adsorption coefficient (of the coating film) of usually 1.20 to 10.0 $\mu m^{-1}$, preferably 1.25 to 10.0 $\mu m^{-1}$; a surface roughness Ra (of the coating film) of usually not more than 12.0 nm, preferably 2.0 to 11.0 nm, more preferably 2.0 to 10.0 nm; a surface resistivity of usually not more than $1 \times 10^{10}$ Ω/sq, preferably not more than $7.5 \times 10^{9}$ Ω/sq, more preferably not more than $5.0 \times 10^{9}$ Ω/sq; and a Young's modulus (relative value to a commercially available video tape: AV T-120 produced by Victor Company of Japan, Limited) of usually 124 to 160, preferably 125 to 160.

In case of using the black plate-shaped ferrite composite particles with magnetoplumbite structure as magnetic particles, wherein the black plate-shaped ferrite particles with magnetoplumbite structure which are coated with the hydroxides and/or oxides of aluminum and/or silicon are used as core particles, the magnetic recording medium according to the present invention has a coercive force of usually 500 to 4,000 Oe, preferably 650 to 4,000 Oe; a squareness (residual magnetic flux density Br/saturation magnetic flux density Bm) of usually 0.82 to 0.95, preferably 0.83 to

0.95; a gloss (of the coating film) of usually 170 to 300 %, preferably 175 to 300 %; a linear adsorption coefficient (of the coating film) of usually 1.20 to 10.0 $\mu m^{-1}$, preferably 1.25 to 10.0 $\mu m^{-1}$; a surface roughness Ra (of the coating film) of usually not more than 11.5 nm, preferably 2.0 to 10.5 nm, more preferably 2.0 to 9.5 nm, a surface resistivity of usually not more than $1.0 \times 10^{10}$ Ω/sq, preferably not more than $7.5 \times 10^{9}$ Ω/sq, more preferably not more than $5.0 \times 10^{9}$ Ω/sq; and a Young's modulus (relative value to a commercially available video tape: AV T-120 produced by Victor Company of Japan, Limited) of usually 125 to 160, preferably 126 to 160.

The black plate-shaped ferrite composite particles with magnetoplumbite structure according to the present invention can be produced by the following method.

The coating of the plate-shaped ferrite particles with magnetoplumbite structure with the alkoxysilane compounds, the polysiloxanes, the modified polysiloxanes, the terminal-modified polysiloxanes or the fluoroalkylsilane compounds, may be conducted by mechanically mixing and stirring the plate-shaped ferrite particles with magnetoplumbite structure together with the alkoxysilane compounds, the polysiloxanes, the modified polysiloxanes, the terminal-modified polysiloxanes or the fluoroalkylsilane compounds; or by mechanically mixing and stirring both the components together while spraying the alkoxysilane compounds, the polysiloxanes, the modified polysiloxanes, the terminal-modified polysiloxanes or the fluoroalkylsilane compounds onto the plate-shaped ferrite particles with magnetoplumbite structure. In these cases, substantially whole amount of the alkoxysilane compounds, the polysiloxanes, the modified polysiloxanes, the terminal-modified polysiloxanes or the fluoroalkylsilane compounds added can be coated onto the surfaces of the plate-shaped ferrite particles with magnetoplumbite structure.

In order to uniformly coat the surfaces of the plate-shaped ferrite particles with magnetoplumbite structure with the alkoxysilane compounds, the polysiloxanes, the modified polysiloxanes, the terminal-modified polysiloxanes or the fluoroalkylsilane compounds, it is preferred that the plate-shaped ferrite particles with magnetoplumbite structure are preliminarily diaggregated by using a pulverizer. As the apparatuses for the mixing and stirring, there may be used an edge runner, a Henschel mixer or the like.

The conditions for the mixing and stirring such as mixing ratio, linear load, stirring speed or mixing and stirring time, may be appropriately adjusted so as to coat the surfaces of the plate-shaped ferrite particles with magnetoplumbite structure with the alkoxysilane compounds, the polysiloxanes, the modified polysiloxanes, the terminal-modified polysiloxanes or the fluoroalkylsilane compounds as uniformly as possible. The mixing and stirring time for the coating treatment is, for example, preferably not less than 20 minutes.

The amount of the alkoxysilane compounds, the polysiloxanes, the modified polysiloxanes, the terminal-modified polysiloxanes or the fluoroalkylsilane compounds added, is preferably 0.15 to 45 parts by weight based on 100 parts by weight of the plate-shaped ferrite particles with magnetoplumbite structure. When the amount of the organosilicon compounds added is less than 0.15 part by weight, it may become difficult to adhere the carbon black fine particles in such an amount enough to improve the blackness and volume resistivity of the obtained black plate-shaped ferrite composite particles with magnetoplumbite structure. On the other hand, when the amount of the organosilicon compounds added is more than 45 parts by weight, a sufficient amount of the carbon black fine particles can be adhered on the surface of the coating, but it is meaningless because the blackness and volume resistivity of the obtained black plate-shaped ferrite composite particles with magnetoplumbite structure cannot be further improved by using such an excess amount of the organosilicon compounds.

Next, the carbon black fine particles are added to the plate-shaped ferrite particles with magnetoplumbite structure coated with the organosilicon compounds, and the resultant mixture is mixed and stirred to adhere the carbon black fine particles on the surfaces of the coating composed of the organosilicon compounds, and then dried.

In the case where the alkoxysilane compounds (1) and the fluoroalkylsilane compounds (3) are used as the coating compound, after the carbon black fine particles are adhered on the surface of the coating, the resultant composite particles are dried or heat-treated, for example, at a temperature of usually 40 to 200°C, preferably 60 to 150°C for usually 10 minutes to 12 hours, preferably 30 minutes to 3 hours, thereby forming a coating composed of the organosilane compounds (1) and the fluoroalkyl organosilane compounds (3), respectively.

It is preferred that the carbon black fine particles are added little by little and slowly, especially about 5 to 60 minutes.

The conditions for mixing and stirring the plate-shaped ferrite particles with magnetoplumbite structure coated with the organosilicon compounds and the carbon black fine particles, such as mixing ratio, linear load, stirring speed or mixing and stirring time, may be appropriately adjusted so as to uniformly adhere the carbon black fine particles on the surface of the coating. The mixing and stirring time for the adhesion treatment is, for example, preferably not less than 20 minutes.

The amount of the carbon black fine particles added, is preferably 0.5 to 10 parts by weight based on 100 parts by weight of the plate-shaped ferrite particles with magnetoplumbite structure. When the amount of the carbon black fine particles added is less than 0.5 part by weight, it may become difficult to adhere the carbon black fine particles in such an amount enough to improve the blackness and volume resistivity of the obtained black plate-shaped ferrite composite particles with magnetoplumbite structure. On the other hand, when the amount of the carbon black fine

particles added is more than 10 parts by weight, a sufficient blackness and volume resistivity of the resultant black plate-shaped ferrite composite particles with magnetoplumbite structure can be obtained, but the carbon black fine particles tend to be desorbed from the surface of the coating because of too large amount of the carbon black fine particles adhered, resulting in deteriorated dispersibility in the vehicle upon the production of the magnetic coating composition.

The plate-shaped ferrite particles with magnetoplumbite structure may be coated with at least one compound selected from the group consisting of hydroxides of aluminum, oxides of aluminum, hydroxides of silicon and oxides of silicon, if required, prior to mixing and stirring with the alkoxysilane compounds, the polysiloxanes, the modified polysiloxanes, the terminal-modified polysiloxanes or the fluoroalkylsilane compounds.

The coating of the hydroxides and/or oxides of aluminum and/or silicon may be conducted by adding an aluminum compound, a silicon compound or both the compounds to a water suspension in which the plate-shaped ferrite particles with magnetoplumbite structure are dispersed, followed by mixing and stirring, and further adjusting the pH value of the suspension, if required, thereby coating the surfaces of the plate-shaped ferrite particles with magnetoplumbite structure with at least one compound selected from the group consisting of hydroxides of aluminum, oxides of aluminum, hydroxides of silicon and oxides of silicon. The thus obtained plate-shaped ferrite particles with magnetoplumbite structure coated with the hydroxides and/or oxides of aluminum and/or silicon are then filtered out, washed with water, dried and pulverized. Further, the particles coated with the hydroxides and/or oxides of aluminum and/or silicon may be subjected to posttreatments such as deaeration treatment and compaction treatment, if required.

As the aluminum compounds, there may be exemplified aluminum salts such as aluminum acetate, aluminum sulfate, aluminum chloride or aluminum nitrate, alkali aluminates such as sodium aluminate, alumina sols or the like.

The amount of the aluminum compound added is 0.01 to 20 % by weight (calculated as Al) based on the weight of the plate-shaped ferrite particles with magnetoplumbite structure. When the amount of the aluminum compound added is less than 0.01 % by weight, it may be difficult to sufficiently coat the surfaces of the plate-shaped ferrite particles with magnetoplumbite structure with hydroxides and/or oxides of aluminum, thereby failing to achieve the improvement of the dispersibility in the vehicle upon the production of the magnetic coating composition. On the other hand, when the amount of the aluminum compound added is more than 20 % by weight, the coating effect is saturated and, therefore, it is meaningless to add such an excess amount of the aluminum compound.

As the silicon compounds, there may be exemplified #3 water glass, sodium orthosilicate, sodium metasilicate, colloidal silica or the like.

The amount of the silicon compound added is 0.01 to 20 % by weight (calculated as $SiO_2$) based on the weight of the plate-shaped ferrite particles with magnetoplumbite structure. When the amount of the silicon compound added is less than 0.01 % by weight, it may be difficult to sufficiently coat the surfaces of the plate-shaped ferrite particles with magnetoplumbite structure with hydroxides and/or oxides of silicon, thereby failing to achieve the improvement of the dispersibility in the vehicle upon the production of the magnetic coating composition. On the other hand, when the amount of the silicon compound added is more than 20 % by weight, the coating effect is saturated and, therefore, it is meaningless to add such an excess amount of the silicon compound.

In the case where both the aluminum and silicon compounds are used in combination for the coating, the total amount of the aluminum and silicon compounds added is preferably 0.01 to 20 % by weight (calculated as a sum of Al and $SiO_2$) based on the weight of the plate-shaped ferrite particles with magnetoplumbite structure.

The process of the magnetic recording medium according to the present invention is described as follows.

The magnetic recording medium according to the present invention can be produced by applying a magnetic coating composition containing the black plate-shaped ferrite composite particles with magnetoplumbite structure, a binder resin and a solvent, on the non-magnetic substrate, followed by drying, to form a magnetic recording layer thereon.

As the solvents, there may be used methyl ethyl ketone, toluene, cyclohexanone, methyl isobutyl ketone, tetrahydrofuran, a mixture of these solvents or the like.

The total amount of the solvent used is 65 to 1,000 parts by weight based on 100 parts by weight of the black plate-shaped ferrite composite particles with magnetoplumbite structure. When the amount of the solvent used is less than 65 parts by weight, the viscosity of the magnetic coating composition prepared therefrom becomes too high, thereby making it difficult to apply the magnetic coating composition. On the other hand, when the amount of the solvent used is more than 1,000 parts by weight, the amount of the solvent volatilized during the formation of the coating film becomes too large, thereby rendering the coating process industrially disadvantageous.

An important point of the present invention lies in that the black plate-shaped ferrite composite particles with magnetoplumbite structure having an average particle size of 0.01 to 0.2 μm, comprising as core particles the plate-shaped ferrite particles with magnetoplumbite structure which may be coated with at least one compound selected from the group consisting of hydroxides of aluminum, oxides of aluminum, hydroxides of silicon and oxides of silicon; the organosilicon compounds coated on the surface of the plate-shaped ferrite particles with magnetoplumbite structure; and the carbon black fine particles having an average particle size of 0.002 to 0.05 μm, which are adhered on

the surface of the coating comprising the organosilicon compounds, in which the total amount of the carbon black fine particles adhered to the coating comprising the organosilicon compounds is 0.5 to 10 parts by weight based on 100 parts by weight of the plate-shaped ferrite particles with magnetoplumbite structure, can show excellent in dispersibility in vehicle due to less amount of carbon black fine particles fallen-off from the surface of each black magnetic acicular composite particle, and have a high blackness and a low volume resistivity.

The reason why the black plate-shaped ferrite composite particles with magnetoplumbite structure according to the present invention can show an excellent blackness, is considered such that since the carbon black fine particles are uniformly and densely adhered on the surfaces of the plate-shaped ferrite particles with magnetoplumbite structure, the color tone of the core particles is hidden behind the carbon black fine particles, so that an inherent color tone of carbon black can be exhibited.

The reason why the black plate-shaped ferrite composite particles with magnetoplumbite structure according to the present invention can show a low volume resistivity is considered as follows. That is, the carbon black fine particles having an excellent conductivity can be uniformly and densely adhered onto the surface of each black plate-shaped ferrite composite particles with magnetoplumbite structure.

The reason why the amount of the carbon black fine particles desorbed or fallen-off from the surfaces of the black plate-shaped ferrite composite particles with magnetoplumbite structure according to the present invention, is small, is considered as follows.

In the case of using as organosilane compounds, the alkoxysilane compounds and the fluoroalkylsilane compounds, metalloxane bonds (≡Si-O-M wherein M represents a metal atom contained in the plate-shaped ferrite particles with magnetoplumbite structure, such as Si, Al, Fe or the like) are formed between the surfaces of the plate-shaped ferrite particles with magnetoplumbite structure and alkoxy groups contained in the organosilicon compounds onto which the carbon black fine particles are adhered, thereby forming a stronger bond between the organosilicon compounds on which the carbon black fine particles are adhered, and the surfaces of the plate-shaped ferrite particles with magnetoplumbite structure.

In the case of using as organosilane compounds, polysiloxanes or modified polysiloxanes, functional groups contained in the polysiloxanes or modified polysiloxanes onto which the carbon black fine particles are adhered, thereby forming a stronger bond between the polysiloxanes or modified polysiloxanes on which the carbon black fine particles are adhered, and the surfaces of the plate-shaped ferrite particles with magnetoplumbite structure.

The reason why the black plate-shaped ferrite composite particles with magnetoplumbite structure according to the present invention can exhibit an excellent dispersibility in vehicles upon the production of magnetic coating compositions, is considered as follows. That is, due to the fact that a less amount of carbon black fine particles are desorbed or fallen-off from the surfaces of the black plate-shaped ferrite composite particles with magnetoplumbite structure, the black plate-shaped ferrite composite particles with magnetoplumbite structure are free from the deterioration in dispersibility due to the desorbed or fallen-off carbon black fine particles.

In addition, since the carbon black fine particles coated form irregularities on the surfaces of the black plate-shaped ferrite composite particles with magnetoplumbite structure, the black plate-shaped ferrite composite particles with magnetoplumbite structure which tend to be stacked together can be prevented from being contacted with each other. Further, since the carbon black fine particles coated are non-magnetic particles, the black plate-shaped ferrite composite particles with magnetoplumbite structure can be prevented from being magnetically aggregated together.

The magnetic recording medium according to the present invention which is obtained by using the above-mentioned black plate-shaped ferrite composite particles with magnetoplumbite structure as magnetic particles, can show a low light transmittance and a low surface resistivity even when the amount of carbon black fine particles in the magnetic recording layer is as small as possible, and the magnetic recording layer thereof can exhibit an improved surface smoothness.

The reason why the magnetic recording medium can show a low light transmittance even when the amount of carbon black fine particles is small, is considered as follows. That is, in the case of the black plate-shaped ferrite composite particles with magnetoplumbite structure according to the present invention, the carbon black fine particles which usually tend to be agglomerated together because of the fineness thereof, can be uniformly and densely adhered onto the surface of each plate-shaped ferrite particle with magnetoplumbite structure and, therefore, can be dispersed in the coating film in such a condition close to primary particles, whereby the individual carbon black fine particles can effectively exhibit their own functions.

The reason why the surface resistivity of the magnetic recording medium can be kept low even when the amount of carbon black fine particles is small, is considered as follows. That is, due to the fact that the black plate-shaped ferrite composite particles with magnetoplumbite structure are uniformly dispersed in the coating film, the carbon black fine particles uniformly and densely adhered onto the surfaces thereof are continuously contacted with each other.

The reason why the magnetic recording medium according to the present invention can show an excellent surface smoothness, is considered as follows. That is, in the present invention, since the amount of the carbon black

fine particles added to the magnetic recording layer is reduced to as small a level as possible, the black plate-shaped ferrite composite particles with magnetoplumbite structure can maintain a good dispersibility in vehicle upon production of the magnetic coating composition without being adversely affected by the carbon black fine particles. Further, on the above-mentioned reason, the black plate-shaped ferrite composite particles with magnetoplumbite structure themselves can exhibit an excellent dispersibility.

The black plate-shaped ferrite composite particles with magnetoplumbite structure according to the present invention can exhibit a high blackness and a low volume resistivity value without containing $Fe^{2+}$ thereinto, and are excellent in dispersibility in vehicles. Therefore, in the case where the black plate-shaped ferrite composite particles with magnetoplumbite structure according to the present invention are used as magnetic particles, it becomes possible to produce a magnetic recording medium which has a low light transmittance and a low surface resistivity value even when the amount of carbon black fine particles added to the magnetic recording layer thereof is reduced to a level as small as possible, and which can show an excellent surface smoothness. Accordingly, the black plate-shaped ferrite composite particles with magnetoplumbite structure according to the present invention are useful as magnetic particles for high-density magnetic recording media.

As described above, due to the fact that the black plate-shaped ferrite composite particles with magnetoplumbite structure show an excellent blackness and a low volume resistivity, the magnetic recording medium according to the present invention can exhibit a low light transmittance and a low surface resistivity. Further, since the amount of carbon black fine particles added to the magnetic recording layer is reduced to as small a level as possible and the dispersibility of the black plate-shaped ferrite composite particles with magnetoplumbite structure is enhanced, the magnetic recording medium can have a smooth surface. Therefore, the magnetic recording medium according to the present invention can be suitably used as those for high-density recording.

Meanwhile, in the magnetic recording medium according to the present invention, by using the black plate-shaped ferrite composite particles with magnetoplumbite structure as magnetic particles, the amount of carbon black fine particles added to the magnetic recording layer, which have an average particle size as fine as about 0.002 to about 0.05 µm, a large BET specific surface area and a poor solvent-wettability, and are therefore, deteriorated in dispersibility in vehicles, can be reduced to as small a level as possible. Accordingly, the magnetic recording medium according to the present invention is advantageous from industrial and economical viewpoints, and is favorable from the standpoints of safety and hygiene.

## EXAMPLES

The present invention is described in more detail by Examples and Comparative Examples, but the Examples are only illustrative and, therefore, not intended to limit the scope of the present invention.

Various properties were evaluated by the following methods.

(1) The average particle diameter and average thickness of plate-shaped ferrite particles with magnetoplumbite structure and black plate-shaped ferrite composite particles with magnetoplumbite structure, and average particle diameter of carbon black fine particles were respectively expressed by the average of values (measured in a predetermined direction) of about 350 particles which were sampled from a micrograph obtained by magnifying an original electron micrograph (× 30,000) by four times in each of the longitudinal and transverse directions.

(2) The plate ratio of the particles was expressed by the ratio of average particle diameter to average thickness thereof.

(3) The geometrical standard deviation of particle diameter was expressed by values obtained by the following method. That is, the particle diameters were measured from the above-magnified electron micrograph. The actual particle diameters and the number of the particles were calculated from the measured values. On a logarithmic normal probability paper, the particle diameters were plotted at regular intervals on the abscissa-axis and the accumulative number (under integration sieve) of particles belonging to each interval of the particle diameters were plotted by percentage on the ordinate-axis by a statistical technique.

The particle diameters corresponding to the number of particles of 50 % and 84.13 %, respectively, were read from the graph, and the geometrical standard deviation was calculated from the following formula:

Geometrical standard deviation = {particle diameters corresponding to 84.13 % under integration sieve}/{particle diameters (geometrical average diameter) corresponding to 50 % under integration sieve}

The closer to 1 the geometrical standard deviation value, the more excellent the particle size distribution.

(4) The specific surface area was expressed by the value measured by a BET method.

(5) The amounts of Al, Si, Ti and Ni which were present within plate-shaped ferrite particles with magnetoplumbite structure or black plate-shaped ferrite composite particles with magnetoplumbite structure or on surfaces thereof, and the amount of Si contained in the organosilicon compounds, were measured by a fluorescent X-ray spectroscopy device 3063 (manufactured by Rigaku Denki Kogyo Co., Ltd.) according to JIS K0119 "General rule of fluorescent X-ray analysis".

(6) The amount of carbon black fine particles adhered on the black plate-shaped ferrite composite particles with magnetoplumbite structure was measured by " Carbon/Sulfur Analyzer EMIA-2200 Model" (manufactured by Horiba Seisakusho Co., Ltd.).

(7) The desorption percentage of carbon black fine particles adhered on the black plate-shaped ferrite composite particles with magnetoplumbite structure was measured by the following method. The closer to zero the desorption percentage, the smaller the amount of carbon black fine particles desorbed from the surfaces of black plate-shaped ferrite composite particles with magnetoplumbite structure.

That is, 3 g of the black plate-shaped ferrite composite particles with magnetoplumbite structure and 40 ml of ethanol were placed in a 50-ml precipitation pipe and then was subjected to ultrasonic dispersion for 20 minutes. Thereafter, the obtained dispersion was allowed to stand for 120 minutes, and the carbon black fine particles desorbed were separated from the black plate-shaped ferrite composite particles with magnetoplumbite structure on the basis of the difference in specific gravity between both the particles. Next, the black plate-shaped ferrite composite particles with magnetoplumbite structure from which the desorbed carbon black fine particles were separated, were mixed again with 40 ml of ethanol, and the obtained mixture was further subjected to ultrasonic dispersion for 20 minutes. Thereafter, the obtained dispersion was allowed to stand for 120 minutes, thereby separating the black plate-shaped ferrite composite particles with magnetoplumbite structure and the desorbed carbon black desorbed from each other. The thus obtained black plate-shaped ferrite composite particles with magnetoplumbite structure were dried at 100°C for one hour, and then the carbon content thereof was measured by the "Carbon/sulfur Analyzer EMIA-2200 Model" (manufactured by Horiba Seisakusho Co., Ltd.). The desorption percentage of the carbon black fine particles was calculated according to the following formula:

$$\text{Desorption percentage of carbon black fine particles} = \{(W_a - W_e)/W_a\} \times 100$$

wherein $W_a$ represents an amount of carbon black fine particles initially adhered on the black plate-shaped ferrite composite particles with magnetoplumbite structure; and $W_e$ represents an amount of carbon black fine particles still adhered on the black plate-shaped ferrite composite particles with magnetoplumbite structure after desorption test.

(8) The ratio of $Fe^{2+}$ to $Fe^{3+}$ ($Fe^{2+}/Fe^{3+}$ ratio) in the black plate-shaped ferrite composite particles with magnetoplumbite structure, is expressed by the value measured as follows. First, sample particles were titrated using a potassium bichromate standard solution according to JIS M-8212 "Method of determining a total quantity of iron in iron ores" in order to determine a total amount of iron (total amount of $Fe^{2+}$ and $Fe^{3+}$) in the sample particles.

The amount of $Fe^{2+}$ was determined as follows. That is, 0.5 g of the sample particles were accurately weighed and charged into a 500 ml-conical flask. While air in the flask was replaced with nitrogen, 50 ml of a mixed acid was added to the flask using a measuring cylinder, and the content of the flask was heated to dissolve the sample particles in the mixed acid. Thereafter, the resultant solution was mixed with 200 ml of water and then with 2 or 3 droplets of a sodium diphenylamine-sulfonate solution, and then titrated using a 1N-$K_2Cr_2O_7$ standard solution, thereby determining the amount of $Fe^{2+}$ in the sample particles.

The amount of $Fe^{3+}$ in the sample particles was obtained by subtracting the amount of $Fe^{2+}$ from the total amount of iron therein.

(9) The blackness of plate-shaped ferrite particles with magnetoplumbite structure and black plate-shaped ferrite composite particles with magnetoplumbite structure was measured by the following method. That is, 0.5 g of sample particles and 1.5 cc of castor oil were intimately kneaded together by a Hoover's muller to form a paste. 4.5 g of clear lacquer was added to the obtained paste and was intimately kneaded to form a paint. The obtained paint was applied on a cast-coated paper by using a 6-mil applicator to produce a coating film piece (having a film thickness of about 30 μm) The thus obtained coating film piece was measured according to JIS Z 8729 by a multi-light source spectrographic colorimeter MSC-IS-2D (manufactured by Suga Testing Machines Manufacturing Co., Ltd.) to determine an L* value of colorimetric indices thereof. The blackness was expressed by the L* value measured.

Here, the L* value represents a lightness, and the smaller the L* value, the more excellent the blackness.

(10) The volume resistivity of the plate-shaped ferrite particles with magnetoplumbite structure and the black plate-shaped ferrite composite particles with magnetoplumbite structure was measured by the following method.

That is, first, 0.5 g of a sample particles to be measured was weighted, and press-molded at 140 $Kg/cm^2$

using a KBr tablet machine (manufactured by Simazu Seisakusho Co., Ltd.), thereby forming a cylindrical test piece.

Next, the thus obtained cylindrical test piece was exposed to an atmosphere maintained at a temperature of 25°C and a relative humidity of 60 % for 12 hours. Thereafter, the cylindrical test piece was set between stainless steel electrodes, and a voltage of 15V was applied between the electrodes using a Wheatstone bridge (model 4329A, manufactured by Yokogawa-Hokushin Denki Co., Ltd.) to measure a resistance value R (Ω).

The cylindrical test piece was measured with respect to an upper surface area A ($cm^2$) and a thickness $t_0$ (cm) thereof. The measured values were inserted into the following formula, thereby obtaining a volume resistivity X (Ω·cm).

$$X\ (\Omega\cdot cm) = R \times (A/t_0)$$

(11) The magnetic properties of the plate-shaped ferrite particles with magnetoplumbite structure, black plate-shaped ferrite composite particles with magnetoplumbite structure and magnetic recording medium were measured under an external magnetic field of 10 kOe by "Vibration Sample Magnetometer VSM-3S-15 (manufactured by Toei Kogyo, Co., Ltd.)".

(12) The percentage of change in coercive force value with the passage of time of the black plate-shaped ferrite composite particles with magnetoplumbite structure is determined as follows.

That is, sample particles to be tested were allowed to stand at a temperature of 60°C and a relative humidity of 90 % for one week. The coercive force value of the sample particles after the above test is divided by that before the test, thereby obtaining a percentage of change in coercive force value with the passage of time of the sample particles.

(13) The light transmittance is expressed by the linear adsorption coefficient calculated by substituting the light transmittance measured by using "UV-Vis Recording Spectrophotometer UV-2100" (manufactured by Shimazu Seisakusho, Ltd.) for the following formula. The larger the value, the more difficult it is for the magnetic recording medium to transmit light:

Linear adsorption coefficient ($\mu m^{-1}$) = {1 n (l/t)}/FT wherein t represents a light transmittance (-) at $\lambda$ = 900 nm, and FT represents thickness (μm) of the magnetic recording layer used for the measurement.

(14) The surface resistivity of the magnetic recording layer of the magnetic recording medium was measured by the following method.

That is, the coating film to be measured was exposed to the environment maintained at a temperature of 25°C and a relative humidity of 60 %, for not less than 12 hours. Thereafter, the coating film was slit into 6 mm width, and the slit coating film was placed on two metal electrodes having a width of 6.5 mm such that a coating surface thereof was contacted with the electrodes. 170-gram weights were respectively suspended at opposite ends of the coating film so as to bring the coating film into close contact with the electrodes. D.C. 500 V was applied between the electrodes, thereby measuring the surface resistivity of the coating film.

(15) The gloss of the surface of the magnetic recording layer was measured at an angle of incidence of 45° by "glossmeter UGV-5D" (manufactured by Suga Shikenki, Co., Ltd.).

(16) The surface roughness Ra is expressed by the average value of the center-line average roughness of the profile curve of the surface of the magnetic recording layer by using "Surfcom-575A" (manufactured by Tokyo Seimitsu Co., Ltd.).

(17) The strength of the magnetic recording layer and non-magnetic undercoat layer was expressed the Young's modulus obtained by "Autograph" (produced by Shimazu Seisakusho Co., Ltd.). The Young's modulus was expressed by the ratio of the Young's modulus of the coating film to that of a commercially available video tape "AV T-120" (produce by Victor Company of Japan, Limited). The higher the relative value, the more favorable.

(18) The viscosity of the coating composition was obtained by measuring the viscosity of the coating composition at 25°C at a shear rate D of 1.92 $sec^{-1}$ by using "E type viscometer EMD-R" (manufactured by Tokyo Keiki, Co., Ltd.).

(19) The thickness of each of the non-magnetic base film, the non-magnetic undercoat layer and the magnetic coating film constituting the magnetic recording medium was measured in the following manner by using "Digital Electronic Micrometer R351C" (manufactured by Anritsu Corp.)

The thickness (A) of a non-magnetic base film was first measured. Similarly, the thickness (B) (B = the sum of the thicknesses of the non-magnetic base film and the non-magnetic undercoat layer) of a non-magnetic substrate obtained by forming a non-magnetic undercoat layer on the base film was measured. Furthermore, the thickness (C) (C = the sum of the thicknesses of the non-magnetic base film, the non-magnetic undercoat layer and the magnetic recording layer) of a magnetic recording medium obtained by forming a magnetic recording layer on the non-magnetic substrata was measured. The thickness of the non-magnetic undercoat layer is expressed by (B) - (A), and the thickness of the magnetic recording layer is expressed by (C) - (B).

Example 1:

<Production of black plate-shaped ferrite composite particles with magnetoplumbite structure>

20 kg of plate-shaped ferrite particles with magnetoplumbite structure (Ti/Fe = 2.0 mol%; Ni/Fe = 4.0 mol%; average particle diameter: 0.033 µm; average thickness: 0.01 µm; plate ratio: 3.3:1; geometrical standard deviation value: 1.38; BET specific surface area value: 56.1 $m^2$/g; blackness (L* value): 31.5; volume resistivity: $8.8 \times 10^8$ Ω·cm; coercive force value: 2,060 Oe; saturation magnetization value: 51.5 emu/g), were deagglomerated in 150 liters of pure water using a stirrer, and further passed through a "TK pipeline homomixer" (tradename, manufactured by Tokushu Kika Kogyo Co., Ltd.) three times, thereby obtaining a slurry containing the plate-shaped ferrite particles with magnetoplumbite structure.

Successively, the obtained slurry containing the plate-shaped ferrite particles with magnetoplumbite structure was passed through a transverse-type sand grinder (tradename "MIGHTY MILL MHG-1.5L", manufactured by Inoue Seisakusho Co., Ltd.) five times at an axis-rotating speed of 2,000 rpm, thereby obtaining a slurry in which the plate-shaped ferrite particles with magnetoplumbite structure were dispersed.

The particles in the obtained slurry which remained on a sieve of 325 meshes (mesh size: 44 µm) was 0 %. The slurry was filtered and washed with water, thereby obtaining a filter cake containing the plate-shaped ferrite particles with magnetoplumbite structure. After the obtained filter cake containing the plate-shaped ferrite particles with magnetoplumbite structure was dried at 120°C, 11.0 kg of the dried particles were then charged into an edge runner "MPUV-2 Model" (tradename, manufactured by Matsumoto Chuzo Tekkosho Co., Ltd.), and mixed and stirred at 30 kg/cm for 15 minutes, thereby lightly deagglomerating the particles.

220 g of methyl triethoxysilane (tradename: "TSL8123", produced by TOSHIBA SILICONE CO., LTD.) was mixed and diluted with 200 ml of ethanol to obtain a methyl triethoxysilane solution. The methyl triethoxysilane solution was added to the deagglomerated plate-shaped ferrite particles with magnetoplumbite structure under the operation of the edge runner. The plate-shaped ferrite particles with magnetoplumbite structure were continuously mixed and stirred at a linear load of 30 kg/cm for 20 minutes.

Next, 550 g of carbon black fine particles (particle shape: granular shape; average particle size: 0.022 µm; geometrical standard deviation value: 1.68; BET specific surface area value: 134 $m^2$/g; and blackness (L* value): 16.6) were added to the plate-shaped ferrite particles with magnetoplumbite structure coated with methyl triethoxysilane for 10 minutes while operating the edge runner. Further, the mixed particles were continuously stirred at a linear load of 30 kg/cm for 30 minutes to adhere the carbon black fine particles on the coating composed of methyl triethoxysilane, thereby obtaining black plate-shaped ferrite composite particles with magnetoplumbite structure.

The obtained black plate-shaped ferrite composite particles with magnetoplumbite structure were aged at 80°C for 120 minutes by using a drier to evaporate water, ethanol or the like which were remained on surfaces of the black plate-shaped ferrite composite particles with magnetoplumbite structure. The resultant black plate-shaped ferrite composite particles with magnetoplumbite structure had an average particle diameter of 0.035 µm, an average thickness of 0.011 µm, a plate ratio of 3.2:1. In addition, the black plate-shaped ferrite composite particles with magnetoplumbite structure showed a geometrical standard deviation value of 1.38, a BET specific surface area value of 58.6$m^2$/g, a blackness (L* value) of 22.8 and a volume resistivity of $4.5 \times 10^6$ Ω·cm. The desorption percentage of the carbon black fine particles from the black plate-shaped ferrite composite particles with magnetoplumbite structure was 3.5 %. As to the magnetic properties, the coercive force value of the black plate-shaped ferrite composite particles with magnetoplumbite structure was 2,072 Oe and the saturation magnetization value was 48.7 emu/g. The ratio of $Fe^{2+}$ to $Fe^{3+}$ ($Fe^{2+}/Fe^{3+}$) in the black plate-shaped ferrite composite particles with magnetoplumbite structure was 0.0. The percentage of change in coercive force value with the passage of time of the black plate-shaped ferrite composite particles with magnetoplumbite structure was 0.0. The coating amount of an organosilane compound produced from methyl triethoxysilane was 0.30 % by weight calculated as Si. The amount of the carbon black fine particles adhered to the coating composed of the organosilane compound produced from methyl triethoxysilane on the plate-shaped ferrite particles with magnetoplumbite structure is 4.73 % by weight (calculated as C) based on the weight of the black plate-shaped ferrite composite particles with magnetoplumbite structure (corresponding to 5 parts by weight based on 100 parts by weight of the plate-shaped ferrite particles with magnetoplumbite structure). Since no independent carbon black fine particles were observed on the electron micrograph, it was determined that a whole amount of the carbon black fine particles were adhered on the coating composed of the organosilane compound produced from methyl triethoxysilane.

Meanwhile, for comparison, the plate-shaped ferrite particles with magnetoplumbite structure uncoated with the organosilicon compound, and the carbon black fine particles were mixed and stirred together by an edge runner in the same manner as described above, thereby obtaining mixed particles. An electron micrograph, it was confirmed that the carbon black fine particles were not adhered on the surfaces of the plate-shaped ferrite particles with magnetoplumbite structure, and both the particles were present independently.

Example 2

<Production of magnetic recording medium>

12 g of the black plate-shaped ferrite composite particles with magnetoplumbite structure obtained in Example 1, 1.2 g of a polishing agent (AKP-50: trade name, produced by Sumitomo Chemical Co., Ltd.), 0.06 g of carbon black (#3250B, trade name, produced by Mitsubishi Chemical Corp.), a binder resin solution (30 % by weight of vinyl chloride-vinyl acetate copolymer resin having a sodium sulfonate group and 70 % by weight of cyclohexanone) and cyclohexanone were mixed to obtain a mixture (solid content: 78 % by weight). The mixture was further kneaded by a plast-mill for 30 minutes to obtain a kneaded material.

The thus-obtained kneaded material was charged into a 140 ml-glass bottle together with 95 g of 1.5 mmϕ glass beads, a binder resin solution (30 % by weight of polyurethane resin having a sodium sulfonate group and 70 % by weight of a solvent (methyl ethyl ketone : toluene = 1 : 1)), cyclohexanone, methyl ethyl ketone and toluene, and the mixture was mixed and dispersed by a paint shaker for 6 hours. Then, the lubricant and hardening agent were added to the mixture, and the resultant mixture was mixed and dispersed by a paint shaker for 15 minutes.

The thus-obtained magnetic coating composition was as follows:

| | |
|---|---|
| Black plate-shaped ferrite composite particles with magnetoplumbite structure | 100 parts by weight |
| Vinyl chloride-vinyl acetate copolymer resin having a sodium sulfonate group | 10 parts by weight |
| Polyurethane resin having a sodium sulfonate group | 10 parts by weight |
| Polishing agent (AKP-50) | 10 parts by weight |
| Carbon black (#3250B) | 1.0 parts by weight |
| Lubricant (myristic acid: butyl stearate = 1 : 2) | 3.0 parts by weight |
| Hardening agent (polyisocyanate) | 5.0 parts by weight |
| Cyclohexanone | 64.9 parts by weight |
| Methyl ethyl ketone | 162.2 parts by weight |
| Toluene | 97.3 parts by weight |

The viscosity of the obtained magnetic coating composition was 2,820 cP.

The magnetic coating composition obtained was applied to a polyethylene terephthalate film (thickness: 12 μm) as a non-magnetic base film to a thickness of 45 μm by an applicator, and the magnetic recording medium obtained was oriented and dried in a magnetic field, and then calendered. The magnetic recording medium was then subjected to a curing reaction at 60°C for 24 hours, and thereafter slit into a width of 0.5 inch, thereby obtaining a magnetic tape. The thickness of the respective magnetic recording layer was 3.5 μm.

The coercive force value of the magnetic tape produced by forming a magnetic recording layer on the non-magnetic base film was 2,121 Oe, the squareness (Br/Bm) thereof was 0.88, the gloss thereof was 183 %, the linear absorption coefficient thereof was 1.41 $\mu m^{-1}$, the surface resistivity was $7.0 \times 10^8$ Ω/sq, the surface roughness Ra thereof was 8.0 nm, and the Young's modulus (relative value) thereof was 135.

Example 3:

<Production of black plate-shaped ferrite composite particles with magnetoplumbite structure>

20 kg of plate-shaped ferrite particles with magnetoplumbite structure (Ti/Fe = 2.0 mol%; Ni/Fe = 4.0 mol%; average particle diameter: 0.033 μm; average thickness: 0.01 μm; plate ratio: 3.3:1; geometrical standard deviation value: 1.38; BET specific surface area value: 56.1 $m^2/g$; blackness (L* value): 31.5; volume resistivity: $8.8 \times 10^8$ Ω·cm; coercive force value: 2,060 Oe; saturation magnetization value: 51.5 emu/g), were deagglomerated in 150 liters of pure water using a stirrer, and further passed through a "TK pipeline homomixer" (tradename, manufactured by Tokushu Kika Kogyo Co., Ltd.) three times, thereby obtaining a slurry containing the plate-shaped ferrite particles with magnetoplumbite structure.

Successively, the obtained slurry containing the plate-shaped ferrite particles with magnetoplumbite structure was passed through a transverse-type sand grinder (tradename "MIGHTY MILL MHG-1.5L", manufactured by Inoue Seisakusho Co., Ltd.) five times at an axis-rotating speed of 2,000 rpm, thereby obtaining a slurry in which the plate-shaped ferrite particles with magnetoplumbite structure were dispersed.

The particles in the obtained slurry which remained on a sieve of 325 meshes (mesh size: 44 μm) was 0 %. The slurry was filtered and washed with water, thereby obtaining a filter cake containing the plate-shaped ferrite particles

with magnetoplumbite structure. After the obtained filter cake containing the plate-shaped ferrite particles with magnetoplumbite structure was dried at 120°C, 11.0 kg of the dried particles were then charged into an edge runner "MPUV-2 Model" (tradename, manufactured by Matsumoto Chuzo Tekkosho Co., Ltd.), and mixed and stirred at 30 Kg/cm for 15 minutes, thereby lightly deagglomerating the particles.

220 g of methyl hydrogen polysiloxane (tradename: "TSF484", produced by TOSHIBA SILICONE CO., LTD.) were added to the deagglomerated plate-shaped ferrite particles with magnetoplumbite structure under the operation of the edge runner. The plate-shaped ferrite particles with magnetoplumbite structure were continuously mixed and stirred at a linear load of 30 kg/cm for 20 minutes.

Next, 550 g of carbon black fine particles (particle shape: granular shape; average particle size: 0.022 μm; geometrical standard deviation value: 1.68; BET specific surface area value: 134 $m^2/g$; and blackness (L* value): 16.6) were added to the plate-shaped ferrite particles with magnetoplumbite structure coated with methyl hydrogen polysiloxane for 10 minutes while operating the edge runner. Further, the mixed particles were continuously stirred at a linear load of 30 kg/cm for 30 minutes to adhere the carbon black fine particles on the coating composed of methyl hydrogen polysiloxane, thereby obtaining black plate-shaped ferrite composite particles with magnetoplumbite structure.

The obtained black plate-shaped ferrite composite particles with magnetoplumbite structure were dried at 80°C for 120 minutes by using a drier to evaporate water or the like which were remained on surfaces of the black plate-shaped ferrite composite particles with magnetoplumbite structure. The resultant black plate-shaped ferrite composite particles with magnetoplumbite structure had an average particle diameter of 0.035 μm, an average thickness of 0.011 μm, a plate ratio of 3.2:1. In addition, the black plate-shaped ferrite composite particles with magnetoplumbite structure showed a geometrical standard deviation value of 1.39, a BET specific surface area value of 59.1 $m^2/g$, a blackness (L* value) of 22.4 and a volume resistivity of $3.6 \times 10^6$ Ω·cm. The desorption percentage of the carbon black fine particles from the black plate-shaped ferrite composite particles with magnetoplumbite structure was 2.6 %. As to the magnetic properties, the coercive force value of the black plate-shaped ferrite composite particles with magnetoplumbite structure was 2,069 Oe and the saturation magnetization value was 49.1 emu/g. The ratio of $Fe^{2+}$ to $Fe^{3+}$ ($Fe^{2+}/Fe^{3+}$) in the black plate-shaped ferrite composite particles with magnetoplumbite structure was 0.0. The percentage of change in coercive force value with the passage of time of the black plate-shaped ferrite composite particles with magnetoplumbite structure was 0.0. The coating amount of methyl hydrogen polysiloxane was 0.88 % by weight calculated as Si. The amount of the carbon black fine particles adhered to the coating composed of methyl hydrogen polysiloxane on the plate-shaped ferrite particles with magnetoplumbite structure is 4.74 % by weight (calculated as C) based on the weight of the black plate-shaped ferrite composite particles with magnetoplumbite structure (corresponding to 5 parts by weight based on 100 parts by weight of the plate-shaped ferrite particles with magnetoplumbite structure). Since no independent carbon black fine particles were observed on the electron micrograph, it was determined that a whole amount of the carbon black fine particles were adhered on the coating composed of methyl hydrogen polysiloxane.

Example 4

<Production of magnetic recording medium>

12 g of the black plate-shaped ferrite composite particles with magnetoplumbite structure obtained in Example 3, 1.2 g of a polishing agent (AKP-50: trade name, produced by Sumitomo Chemical Co., Ltd.), 0.06 g of carbon black (#3250B, trade name, produced by Mitsubishi Chemical Corp.), a binder resin solution (30 % by weight of vinyl chloride-vinyl acetate copolymer resin having a sodium sulfonate group and 70 % by weight of cyclohexanone) and cyclohexanone were mixed to obtain a mixture (solid content: 78 % by weight). The mixture was further kneaded by a plast-mill for 30 minutes to obtain a kneaded material.

The thus-obtained kneaded material was charged into a 140 ml-glass bottle together with 95 g of 1.5 mmϕ glass beads, a binder resin solution (30 % by weight of polyurethane resin having a sodium sulfonate group and 70 % by weight of a solvent (methyl ethyl ketone : toluene = 1 : 1)), cyclohexanone, methyl ethyl ketone and toluene, and the mixture was mixed and dispersed by a paint shaker for 6 hours. Then, the lubricant and hardening agent were added to the mixture, and the resultant mixture was mixed and dispersed by a paint shaker for 15 minutes.

The thus-obtained magnetic coating composition was the same as Example 2.

The viscosity of the obtained magnetic coating composition was 2,915 cP.

The magnetic coating composition obtained was applied to a polyethylene terephthalate film (thickness: 12 μm) as a non-magnetic base film to a thickness of 45 μm by an applicator, and the magnetic recording medium obtained was oriented and dried in a magnetic field, and then calendered. The magnetic recording medium was then subjected to a curing reaction at 60°C for 24 hours, and thereafter slit into a width of 0.5 inch, thereby obtaining a magnetic tape. The thickness of the respective magnetic recording layer was 3.5 μm.

The coercive force value of the magnetic tape produced by forming a magnetic recording layer on the non-magnetic base film was 2,086 Oe, the squareness (Br/Bm) thereof was 0.89, the gloss thereof was 186 %, the linear absorption coefficient thereof was 1.44 $\mu m^{-1}$, and the surface resistivity was $5.2 \times 10^8$ Ω/sq, the surface roughness Ra thereof was 7.2 nm, the Young's modulus (relative value) thereof was 135.

Example 5:

<Production of black plate-shaped ferrite composite particles with magnetoplumbite structure>

20 kg of plate-shaped ferrite particles with magnetoplumbite structure (Ti/Fe = 2.0 mol%; Ni/Fe = 4.0 mol%; average particle diameter: 0.033 µm; average thickness: 0.01 µm; plate ratio: 3.3:1; geometrical standard deviation value: 1.38; BET specific surface area value: 56.1 $m^2/g$; blackness (L* value): 31.5; volume resistivity: $8.8 \times 10^8$ Ω·cm; coercive force value: 2,060 Oe; saturation magnetization value: 51.5 emu/g), were deagglomerated in 150 liters of pure water using a stirrer, and further passed through a "TK pipeline homomixer" (tradename, manufactured by Tokushu Kika Kogyo Co., Ltd.) three times, thereby obtaining a slurry containing the plate-shaped ferrite particles with magnetoplumbite structure.

Successively, the obtained slurry containing the plate-shaped ferrite particles with magnetoplumbite structure was passed through a transverse-type sand grinder (tradename "MIGHTY MILL MHG-1.5L", manufactured by Inoue Seisakusho Co., Ltd.) five times at an axis-rotating speed of 2,000 rpm, thereby obtaining a slurry in which the plate-shaped ferrite particles with magnetoplumbite structure were dispersed.

The particles in the obtained slurry which remained on a sieve of 325 meshes (mesh size: 44 µm) was 0 %. The slurry was filtered and washed with water, thereby obtaining a filter cake containing the plate-shaped ferrite particles with magnetoplumbite structure. After the obtained filter cake containing the plate-shaped ferrite particles with magnetoplumbite structure was dried at 120°C, 11.0 kg of the dried particles were then charged into an edge runner "MPW-2 Model" (tradename, manufactured by Matsumoto Chuzo Tekkosho Co., Ltd.), and mixed and stirred at 30 kg/cm for 15 minutes, thereby lightly deagglomerating the particles.

220 g of tridecafluorooctyl trimethoxysilane (tradename "TSL8257", produced by TOSHIBA SILICONE CO., LTD.) were added to the deagglomerated plate-shaped ferrite particles with magnetoplumbite structure under the operation of the edge runner. The plate-shaped ferrite particles with magnetoplumbite structure were continuously mixed and stirred at a linear load of 30 kg/cm for 20 minutes.

Next, 550 g of carbon black fine particles (particle shape: granular shape; average particle size: 0.022 µm; geometrical standard deviation value: 1.68; BET specific surface area value: 134 $m^2/g$; and blackness (L* value): 16.6) were added to the plate-shaped ferrite particles with magnetoplumbite structure coated with tridecafluorooctyl trimethoxysilane for 10 minutes while operating the edge runner. Further, the mixed particles were continuously stirred at a linear load of 30 kg/cm for 30 minutes to adhere the carbon black fine particles on the coating composed of tridecafluorooctyl trimethoxysilane, thereby obtaining black plate-shaped ferrite composite particles with magnetoplumbite structure.

The obtained black plate-shaped ferrite composite particles with magnetoplumbite structure were aged at 80°C for 120 minutes by using a drier to evaporate water or the like which were remained on surfaces of the black plate-shaped ferrite composite particles with magnetoplumbite structure. The resultant black plate-shaped ferrite composite particles with magnetoplumbite structure had an average particle diameter of 0.035 µm, an average thickness of 0.011 µm, a plate ratio of 3.2:1. In addition, the black plate-shaped ferrite composite particles with magnetoplumbite structure showed a geometrical standard deviation value of 1.38, a BET specific surface area value of 59.0 $m^2/g$, a blackness (L* value) of 22.6 and a volume resistivity of $3.8 \times 1.0^6$ Ω·cm. The desorption percentage of the carbon black fine particles from the black plate-shaped ferrite composite particles with magnetoplumbite structure was 4.3 %. As to the magnetic properties, the coercive force value of the black plate-shaped ferrite composite particles with magnetoplumbite structure was 2,066 Oe and the saturation magnetization value was 48.9 emu/g. The ratio of $Fe^{2+}$ to $Fe^{3+}$ ($Fe^{2+}/Fe^{3+}$) in the black plate-shaped ferrite composite particles with magnetoplumbite structure was 0.0. The percentage of change in coercive force value with the passage of time of the black plate-shaped ferrite composite particles with magnetoplumbite structure was 0.0. The coating amount of a fluoroalkyl organosilane compound produced from tridecafluorooctyl trimethoxysilane was 0.11 % by weight calculated as Si. The amount of the carbon black fine particles adhered to the coating composed of the fluoroalkyl organosilane compound produced from tridecafluorooctyl trimethoxysilane on the plate-shaped ferrite particles with magnetoplumbite structure is 4.73 % by weight (calculated as C) based on the weight of the black plate-shaped ferrite composite particles with magnetoplumbite structure (corresponding to 5 parts by weight based on 100 parts by weight of the plate-shaped ferrite particles with magnetoplumbite structure). Since no independent carbon black fine particles were observed on the electron micrograph, it was determined that a whole amount of the carbon black fine particles were adhered on the coating composed of the fluoroalkyl organosilane compound produced from tridecafluorooctyl trimethoxysilane.

Example 6

<Production of magnetic medium>

12 g of the black plate-shaped ferrite composite particles with magnetoplumbite structure obtained in Example 5, 1.2 g of a polishing agent (AKP-50: trade name, produced by Sumitomo Chemical Co., Ltd.), 0.06 g of carbon black (#3250B, trade name, produced by Mitsubishi Chemical Corp.), a binder resin solution (30 % by weight of vinyl chloride-vinyl acetate copolymer resin having a sodium sulfonate group and 70 % by weight of cyclohexanone) and cyclohexanone were mixed to obtain a mixture (solid content: 78 % by weight). The mixture was further kneaded by a plast-mill for 30 minutes to obtain a kneaded material.

The thus-obtained kneaded material was charged into a 140 ml-glass bottle together with 95 g of 1.5 mmϕ glass beads, a binder resin solution (30 % by weight of polyurethane resin having a sodium sulfonate group and 70 % by weight of a solvent (methyl ethyl ketone : toluene = 1 : 1)), cyclohexanone, methyl ethyl ketone and toluene, and the mixture was mixed and dispersed by a paint shaker for 6 hours. Then, the lubricant and hardening agent were added to the mixture, and the resultant mixture was mixed and dispersed by a paint shaker for 15 minutes.

The thus-obtained magnetic coating composition was the same as Example 2.

The viscosity of the obtained magnetic coating composition was 2,853 cP.

The magnetic coating composition obtained was applied to a polyethylene terephthalate film (thickness: 12 μm) as a non-magnetic base film to a thickness of 45 μm by an applicator, and the magnetic recording medium obtained was oriented and dried in a magnetic field, and then calendered. The magnetic recording medium was then subjected to a curing reaction at 60°C for 24 hours, and thereafter slit into a width of 0.5 inch, thereby obtaining a magnetic tape. The thickness of the respective magnetic recording layer was 3.5 μm.

The coercive force value of the magnetic tape produced by forming a magnetic recording layer on the non-magnetic base film was 2,099 Oe, the squareness (Br/Bm) thereof was 0.89, the gloss thereof was 185 %, the linear absorption coefficient thereof was 1.40 $\mu m^{-1}$, the surface resistivity was $9.6 \times 10^8$ Ω/sq, the surface roughness Ra thereof was 7.8 nm, and the Young's modulus (relative value) thereof was 136.

Core particles 1 to 2:

Various plate-shaped ferrite particles with magnetoplumbite structure were prepared, and treated in the same manner as in Example 1 in order to obtain deaggregated plate-shaped ferrite particles with magnetoplumbite structure.

Various properties of the obtained plate-shaped ferrite particles with magnetoplumbite structure are shown in Table 1.

Core particles 3:

The same procedure as defined in Example 1 was conducted by using 20 kg of the deagglomerated plate-shaped ferrite particles with magnetoplumbite structure (core particles 1) and 150 liters of water, thereby obtaining a slurry containing the plate-shaped ferrite particles with magnetoplumbite structure. The pH value of the obtained re-dispersed slurry containing the plate-shaped ferrite particles with magnetoplumbite structure was adjusted to 10.5 by adding an aqueous sodium hydroxide solution, and then the concentration of the slurry was adjusted to 98 g/liter by adding water thereto. After 150 liters of the slurry was heated to 60°C, 5,444 ml of a 1.0 mol/liter sodium aluminate solution (equivalent to 1.0 % by weight (calculated as Al) based on the weight of the plate-shaped ferrite particles with magnetoplumbite structure) was added to the slurry. After allowing the slurry to stand for 30 minutes, the pH value of the slurry was adjusted to 7.5 by adding an aqueous acetic acid solution. After further allowing the slurry to stand for 30 minutes, the slurry was subjected to filtration, washing with water, drying and pulverization, thereby obtaining the plate-shaped ferrite particles with magnetoplumbite structure coated with hydroxides of aluminum.

Main production conditions are shown in Table 2, and various properties of the obtained plate-shaped ferrite particles with magnetoplumbite structure are shown in Table 3.

Core particles 4 to 5:

The same procedure as defined above with respect to the core particles 3 was conducted except that kind of plate-shaped ferrite particles with magnetoplumbite structure, and kind and amount of surface-coating material used in the surface treatment step were varied, thereby obtaining surface-treated plate-shaped ferrite particles with magnetoplumbite structure.

Main production conditions are shown in Table 2, and various properties of the obtained surface-treated plate-shaped ferrite particles with magnetoplumbite structure are shown in Table 3.

Examples 7 to 11 and Comparative Examples 1 to 5:

The same procedure as defined in Example 1 was conducted except that kind of core particles to be treated, addition or non-addition of an alkoxysilane compound in the coating treatment with the alkoxysilane compound, kind and amount of the alkoxysilane compound added, treating conditions of edge runner in the coating treatment, kind and amount of carbon black fine particles adhered, and treating conditions of edge runner used in the adhering process of the carbon black fine particles, were varied, thereby obtaining black plate-shaped ferrite composite particles with magnetoplumbite structure. The black plate-shaped ferrite composite particles with magnetoplumbite structure obtained in Examples 7 to 11 were observed by an electron microscope. As a result, almost no independent carbon black fine particles were recognized. Therefore, it was confirmed that a substantially whole amount of the carbon black fine particles were adhered on the coating composed of organosilane compound produced from the alkoxysilane compound.
Various properties of the carbon black fine particles A to C are shown in Table 4.
Main production conditions are shown in Table 5, and various properties of the obtained black plate-shaped ferrite composite particles with magnetoplumbite structure are shown in Table 6.

Comparative Example 6 (Example 1 of Japanese Patent Application Laid-Open (KOKAI) No. 4-157615(1992)):

10 g of plate-shaped ferrite particles with magnetoplumbite structure (average particle size: 0.08 µm; average thickness: 0.011 µm; plate ratio: 7.0:1; coercive force value: 680 Oe; saturation magnetization value: 58 emu/g; blackness (L* value): 32.9; volume resistivity value: $2.8 \times 10^9$ Ω·cm) were charged into a tubular reducing furnace. While passing a water vapor-containing hydrogen gas through the reducing furnace, the plate-shaped ferrite particles with magnetoplumbite structure were heat-treated at 350°C for 4 hours. Thereafter, the temperature of the reduction furnace was set to 250°C, and while passing a carbon dioxide gas through the reducing furnace, the plate-shaped ferrite particles with magnetoplumbite structure were further heat-treated at that temperature for 4 hours. After cooling, the thus treated particles were removed from the reducing furnace, thereby obtaining plate-shaped ferrite particles with magnetoplumbite structure on the surfaces of which carbon was deposited. It was confirmed that the amount of carbon deposited on the plate-shaped ferrite particles with magnetoplumbite structure was 6 % by weight.
Various properties of the obtained carbon-deposited plate-shaped ferrite particles with magnetoplumbite structure are shown in Table 6.

Comparative Example 7 (Example 1 of Japanese Patent Application Laid-Open (KOKAI) No. 62-154228(1987)):

One mole of ferric chloride ($FeCl_3$), 1/8 mole of barium chloride ($BaCl_2$), 1/20 mole of cobalt chloride ($CoCl_2$) and 1/20 mole of titanium chloride ($TiCl_4$) were dissolved in one liter of water. An aqueous sodium hydroxide solution prepared by dissolving 5 moles of sodium hydroxide in one liter of water was added to the obtained mixed solution while stirring. Next, the obtained suspension was aged for one day, thereby obtaining a precipitate. Successively, the obtained precipitate was placed in an autoclave, and heat-reacted at 300°C for 2 hours, thereby obtaining barium ferrite particles. The obtained barium ferrite particles were washed with water and dried, and further heat-treated in air at 800°C for 2 hours. Next, the barium ferrite particles were subjected to reduction treatment in a hydrogen gas at 250°C for 2 hours, thereby obtaining plate-shaped barium ferrite particles.
Various properties of the obtained plate-shaped ferrite particles with magnetoplumbite structure, are shown in Table 6.

Example 12 to 19, Comparative Examples 8 to 20:

<Production of magnetic recording medium >

The same procedure as defined in Example 2 was conducted except for varying the kind of the black plate-shaped ferrite particles with magnetoplumbite structure, the kind and amount of the carbon black fine particles, thereby producing a magnetic recording medium.
The main producing conditions and various properties are shown in Tables 7 to 8.

Examples 20 to 24 and Comparative Examples 21 to 23:

The same procedure as defined in Example 3 was conducted except that kind of core particles to be treated, addition or non-addition of an polysiloxane in the coating treatment, kind and amount of the polysiloxane added, treating conditions of edge runner in the coating treatment, kind and amount of carbon black fine particles adhered, and treating conditions of edge runner used in the adhering process of the carbon black fine particles, were varied, thereby obtaining

black plate-shaped ferrite composite particles with magnetoplumbite structure. The black plate-shaped ferrite composite particles with magnetoplumbite structure obtained in Examples 20 to 24 were observed by an electron microscope. As a result, almost no independent carbon black fine particles were recognized. Therefore, it was confirmed that a substantially whole amount of the carbon black fine particles were adhered on the coating composed of polysiloxane.
Main production conditions are shown in Table 9, and various properties of the obtained black plate-shaped ferrite composite particles with magnetoplumbite structure are shown in Table 10.

Examples 25 to 29 and Comparative Examples 24 to 26:

The same procedure as defined in Example 3 was conducted except that kind of core particles to be treated, addition or non-addition of a modified polysiloxane in the coating treatment, kind and amount of the modified polysiloxane added, treating conditions of edge runner in the coating treatment, kind and amount of carbon black fine particles adhered, and treating conditions of edge runner used in the adhering process of the carbon black fine particles, were varied, thereby obtaining black plate-shaped ferrite composite particles with magnetoplumbite structure. The black plate-shaped ferrite composite particles with magnetoplumbite structure obtained in Examples 25 to 29 were observed by an electron microscope. As a result, almost no independent carbon black fine particles were recognized. Therefore, it was confirmed that a substantially whole amount of the carbon black fine particles were adhered on the coating composed of modified polysiloxane.
Main production conditions are shown in Table 11, and various properties of the obtained black plate-shaped ferrite composite particles with magnetoplumbite structure are shown in Table 12.

Examples 30 to 34 and Comparative Examples 27 to 29:

The same procedure as defined in Example 3 was conducted except that kind of core particles to be treated, addition or non-addition of a terminal-modified polysiloxane in the coating treatment, kind and amount of the terminal-modified polysiloxane added, treating conditions of edge runner in the coating treatment, kind and amount of carbon black fine particles adhered, and treating conditions of edge runner used in the adhering process of the carbon black fine particles, were varied, thereby obtaining black plate-shaped ferrite composite particles with magnetoplumbite structure. The black plate-shaped ferrite composite particles with magnetoplumbite structure obtained in Examples 30 to 34 were observed by an electron microscope. As a result, almost no independent carbon black fine particles were recognized. Therefore, it was confirmed that a substantially whole amount of the carbon black fine particles were adhered on the coating composed of terminal-modified polysiloxane.
Main production conditions are shown in Table 13, and various properties of the obtained black plate-shaped ferrite composite particles with magnetoplumbite structure are shown in Table 14.

Example 35 to 58, Comparative Examples 30 to 38:

<Production of magnetic recordinq medium >

The same procedure as defined in Example 4 was conducted except for varying the kind of the black plate-shaped ferrite composite particles with magnetoplumbite structure, the kind and amount of the carbon black fine particles, thereby producing a magnetic recording medium.
The main producing conditions and various properties are shown in Tables 15 to 17.

Exampes 59 to 63 and Comparative Examples 39 to 41:

The same procedure as defined in Example 5 was conducted except that kind of core particles to be treated, addition or non-addition of a fluoroalkylsilane compound in the coating treatment with the fluoroalkyl organosilane compound, kind and amount of the fluoroalkylsilane compound added, treating conditions of edge runner in the coating treatment, kind and amount of carbon black fine particles adhered, and treating conditions of edge runner used in the adhering process of the carbon black fine particles, were varied, thereby obtaining black plate-shaped ferrite composite particles with magnetoplumbite structure. The black plate-shaped ferrite composite particles with magnetoplumbite structure obtained in Examples 59 to 63 were observed by an electron microscope. As a result, almost no independent carbon black fine particles were recognized. Therefore, it was confirmed that a substantially whole amount of the carbon black fine particles were adhered on the coating composed of fluoroalkyl organosilane compound produced from the fluoroalkylsilane compound.
Main production conditions are shown in Table 18, and various properties of the obtained black plate-shaped ferrite composite particles with magnetoplumbite structure are shown in Table 19.

Example 64 to 71, Comparative Examples 42 to 44:

<Production of magnetic recording medium >

The same procedure as defined in Example 6 was conducted except for varying the kind of the black plate-shaped ferrite particles with magnetoplumbite structure, the kind and amount of the carbon black fine particles, thereby producing a magnetic recording medium.

The main producing conditions and various properties are shown in Table 20.

Table 1

| Core particles | Kind | Properties of plate-shaped ferrite particles with magnetoplumbite structure |
|---|---|---|
| | | Particle shape |
| Core particles 1 | Barium ferrite particles (Ti/Fe=3.15 mol%, Ni/Fe=5.9 mol%) | Plate-shaped |
| Core particles 2 | Barium ferrite particles (Ti/Fe=1.5 mol%, Ni/Fe=2.8 mol%) | Plate-shaped |

Table 1 (continued)

| Core particles | Properties of plate-shaped ferrite particles with magnetoplumbite structure | | | |
|---|---|---|---|---|
| | Average particle size (μm) | Average thickness (μm) | Plate ratio (-) | Geometrical standard deviation value (-) |
| Core particles 1 | 0.050 | 0.012 | 4.2:1 | 1.35 |
| Core particles 2 | 0.032 | 0.009 | 3.6:1 | 1.40 |

Table 1 (continued)

| Core particles | Properties of plate-shaped ferrite particles with magnetoplumbite structure | | |
|---|---|---|---|
| | BET specific surface area value ($m^2/g$) | Coercive force value (Oe) | Saturation magnetization value (emu/g) |
| Core particles 1 | 45.1 | 1,701 | 55.3 |
| Core particles 2 | 58.8 | 2,587 | 50.1 |

Table 1 (continued)

| Core particles | Properties of plate-shaped ferrite particles with magnetoplumbite structure | |
|---|---|---|
| | Volume resistivity value ($\Omega \cdot cm$) | Blackness (L* value) (-) |
| Core particles 1 | $8.6 \times 10^8$ | 32.8 |
| Core particles 2 | $6.7 \times 10^8$ | 31.6 |

Table 2

| Core particles | Kind of core particles | Surface-treating process | | |
|---|---|---|---|---|
| | | Surface-treating material | | |
| | | Kind | Calculated as | Amount (wt. %) |
| Core particles 3 | Core particles 1 | Sodium aluminate | Al | 1.0 |
| Core particles 4 | Core particles 2 | Water glass #3 | $SiO_2$ | 0.75 |
| Core particles 5 | Core particles 2 | Aluminum sulfate<br>Water glass #3 | Al<br>$SiO_2$ | 2.0<br>0.5 |

Table 2 (continued)

| Core particles | Surface-treating process | | |
|---|---|---|---|
| | Coating material | | |
| | Kinds | Calculated as | Amount (wt. %) |
| Core particles 3 | A | Al | 0.98 |
| Core particles 4 | S | $SiO_2$ | 0.72 |
| Core particles 5 | A<br>S | Al<br>$SiO_2$ | 1.93<br>0.46 |

(Note) A: Hydroxide of aluminum
S: Oxide of silicon

Table 3

| Core particles | Properties of surface-treated plate-shaped ferrite particles with magnetoplumbite structure | | | |
|---|---|---|---|---|
| | Average particle size (μm) | Average thickness (μm) | Plate ratio (-) | Geometrical standard deviation value (-) |
| Core particles 3 | 0.050 | 0.012 | 4.2:1 | 1.35 |
| Core particles 4 | 0.032 | 0.009 | 3.6:1 | 1.40 |
| Core particles 5 | 0.032 | 0.010 | 3.2:1 | 1.40 |

Table 3 (continued)

| Core particles | Properties of surface-treated plate-shaped ferrite particles with magnetoplumbite structure | | |
|---|---|---|---|
| | BET specific surface area value ($m^2/g$) | Coercive force value (Oe) | Saturation magnetization value (emu/g) |
| Core particles 3 | 46.0 | 1,703 | 54.8 |
| Core particles 4 | 60.1 | 2,590 | 49.6 |
| Core particles 5 | 62.5 | 2,586 | 48.2 |

Table 3 (continued)

| Core particles | Properties of surface-treated plate-shaped ferrite particles with magnetoplumbite structure | |
|---|---|---|
| | Volume resistivity value (Ω·cm) | Blackness (L* value) (-) |
| Core particles 3 | $9.0 \times 10^8$ | 33.0 |
| Core particles 4 | $7.1 \times 10^8$ | 31.8 |
| Core particles 5 | $8.9 \times 10^8$ | 31.9 |

Table 4

| Kind of carbon black fine particles | Properties of carbon black fine particles | | |
|---|---|---|---|
| | Particle shape | Average particle size (μm) | Geometrical standard deviation value (-) |
| Carbon black A | Granular | 0.022 | 1.78 |
| Carbon black B | Granular | 0.015 | 1.56 |
| Carbon black C | Granular | 0.030 | 2.06 |

Table 4 (continued)

| Kind of carbon black fine particles | Properties of carbon black fine particles | |
|---|---|---|
| | BET specific surface area value ($m^2/g$) | Blackness ($L^*$ value) (-) |
| Carbon black A | 133.5 | 14.6 |
| Carbon black B | 265.3 | 15.2 |
| Carbon black C | 84.6 | 17.0 |

Table 5

| Examples and Comparative Examples | Kind of core particles | Production of black plate-shaped ferrite composite particles with magnetoplumbite structure | |
|---|---|---|---|
| | | Coating with alkoxysilane or silicon compound | |
| | | Alkoxysilane or silicon compound | |
| | | Kind | Amount added (part by weight) |
| Example 7 | Core particles 1 | Methyl triethoxysilane | 2.0 |
| Example 8 | Core particles 2 | Methyl trimethoxysilane | 2.0 |
| Example 9 | Core particles 3 | Dimethyl dimethoxysilane | 3.0 |
| Example 10 | Core particles 4 | Phenyl triethoxysilane | 1.0 |
| Example 11 | Core particles 5 | Isobutyl trimethoxysilane | 2.0 |
| Comparative Example 1 | Core particles 1 | - | - |
| Comparative Example 2 | Core particles 1 | Methyl triethoxysilane | 2.0 |
| Comparative Example 3 | Core particles 2 | Dimethyl dimethoxysilane | 1.0 |
| Comparative Example 4 | Core particles 2 | Methyl triethoxysilane | 0.005 |
| Comparative Example 5 | Core particles 1 | γ-aminopropyl triethoxysilane | 1.0 |

Table 5 (continued)

| Examples and Comparative Examples | Production of black plate-shaped ferrite composite particles with magnetoplumbite structure | | |
|---|---|---|---|
| | Coating with alkoxysilane or silicon compound | | |
| | Edge runner treatment | | Coating amount (calculated as Si) (wt. %) |
| | Linear load (Kg/cm) | Time (min) | |
| Example 7 | 60 | 30 | 0.29 |
| Example 8 | 60 | 30 | 0.40 |
| Example 9 | 30 | 30 | 0.67 |
| Example 10 | 30 | 30 | 0.10 |
| Example 11 | 45 | 45 | 0.30 |
| Comparative Example 1 | - | - | - |
| Comparative Example 2 | 30 | 30 | 0.30 |
| Comparative Example 3 | 30 | 30 | 0.23 |
| Comparative Example 4 | 30 | 30 | $7 \times 10^{-4}$ |
| Comparative Example 5 | 60 | 30 | 0.13 |

Table 5 (continued)

| Examples and Comparative Examples | Production of black plate-shaped ferrite composite particles with magnetoplumbite structure | |
|---|---|---|
| | Adhesion of carbon black fine particles | |
| | Carbon black | |
| | Kind | Amount added (part by weight) |
| Example 7 | A | 5.0 |
| Example 8 | A | 2.0 |
| Example 9 | A | 5.0 |
| Example 10 | B | 3.0 |
| Example 11 | C | 1.0 |
| Comparative Example 1 | A | 2.0 |
| Comparative Example 2 | - | - |
| Comparative Example 3 | A | 0.01 |
| Comparative Example 4 | B | 1.5 |
| Comparative Example 5 | C | 2.0 |

Note: A: Carbon black A described in Table 4.
B: Carbon black B described in Table 4.
C: Carbon black C described in Table 4.

Table 5 (continued)

| Examples and Comparative Examples | Production of black plate-shaped ferrite composite particles with magnetoplumbite structure | | |
|---|---|---|---|
| | Adhesion of carbon black fine particles | | |
| | Edge runner treatment | | Amount adhered (calculated as C) (wt. %) |
| | Linear load (Kg/cm) | Time (min) | |
| Example 7 | 60 | 30 | 4.76 |
| Example 8 | 30 | 30 | 1.88 |
| Example 9 | 60 | 30 | 4.76 |
| Example 10 | 30 | 45 | 2.90 |
| Example 11 | 60 | 30 | 0.98 |
| Comparative Example 1 | 30 | 30 | 1.96 |
| Comparative Example 2 | - | - | - |
| Comparative Example 3 | 30 | 30 | 0.009 |
| Comparative Example 4 | 30 | 30 | 1.47 |
| Comparative Example 5 | 60 | 30 | 1.95 |

Table 6

| Examples and Comparative Examples | Properties of black plate-shaped ferrite composite particles with magnetoplumbite structure | | | |
|---|---|---|---|---|
| | Average particle size (μm) | Average thickness (μm) | Plate ratio (-) | Geometrical standard deviation value (-) |
| Example 7 | 0.051 | 0.012 | 4.3:1 | 1.36 |
| Example 8 | 0.033 | 0.010 | 3.3:1 | 1.41 |
| Example 9 | 0.051 | 0.013 | 3.9:1 | 1.36 |
| Example 10 | 0.033 | 0.010 | 3.3:1 | 1.40 |
| Example 11 | 0.032 | 0.010 | 3.2:1 | 1.40 |
| Comparative Example 1 | 0.050 | 0.013 | 3.8:1 | - |
| Comparative Example 2 | 0.050 | 0.012 | 4.2:1 | 1.36 |
| Comparative Example 3 | 0.032 | 0.009 | 3.6:1 | - |
| Comparative Example 4 | 0.033 | 0.010 | 3.3:1 | - |
| Comparative Example 5 | 0.051 | 0.013 | 3.9:1 | - |
| Comparative Example 6 | 0.081 | 0.012 | 6.8:1 | 1.40 |
| Comparative Example 7 | 0.080 | 0.012 | 6.7:1 | 1.45 |

Table 6 (continued)

| Examples and Comparative Examples | Properties of black plate-shaped ferrite composite particles with magnetoplumbite structure | | |
|---|---|---|---|
| | BET specific surface area value ($m^2/g$) | Coercive force value (Oe) | Saturation magnetization value (emu/g) |
| Example 7 | 47.1 | 1,713 | 51.6 |
| Example 8 | 59.9 | 2,601 | 48.1 |
| Example 9 | 47.8 | 1,709 | 48.8 |
| Example 10 | 58.9 | 2,596 | 47.6 |
| Example 11 | 59.3 | 2,589 | 48.4 |
| Comparative Example 1 | 50.1 | 1,704 | 54.1 |
| Comparative Example 2 | 43.6 | 1,712 | 55.0 |
| Comparative Example 3 | 58.9 | 2,610 | 48.6 |
| Comparative Example 4 | 59.6 | 2,592 | 47.6 |
| Comparative Example 5 | 63.8 | 1,698 | 52.6 |
| Comparative Example 6 | 35.8 | 690 | 57.0 |
| Comparative Example 7 | 31.2 | 650 | 58.3 |

Table 6 (continued)

| Examples and Comparative Examples | Properties of black plate-shaped ferrite composite particles with magnetoplumbite structure | | |
|---|---|---|---|
| | Volume resistivity value (Ω·cm) | Blackness (L* value) (-) | Carbon black desorption percentage (%) |
| Example 7 | $3.6 \times 10^6$ | 22.1 | 3.8 |
| Example 8 | $8.1 \times 10^6$ | 23.6 | 4.6 |
| Example 9 | $1.6 \times 10^6$ | 21.6 | 2.1 |
| Example 10 | $5.6 \times 10^6$ | 23.8 | 5.6 |
| Example 11 | $3.6 \times 10^6$ | 24.6 | 1.8 |
| Comparative Example 1 | $8.9 \times 10^7$ | 27.6 | 68.3 |
| Comparative Example 2 | $8.6 \times 10^9$ | 33.6 | - |
| Comparative Example 3 | $1.3 \times 10^9$ | 30.6 | - |
| Comparative Example 4 | $7.3 \times 10^7$ | 28.3 | 45.6 |
| Comparative Example 5 | $9.1 \times 10^7$ | 27.2 | 28.2 |
| Comparative Example 6 | $5.3 \times 10^7$ | 27.6 | 36.5 |
| Comparative Example 7 | $6.4 \times 10^7$ | 28.3 | - |

Table 6 (continued)

| Examples and Comparative Examples | Properties of black plate-shaped ferrite composite particles with magnetoplumbite structure | |
|---|---|---|
| | Percentage of change in coercive force value (%) | $Fe^{2+}/Fe^{3+}$ (-) |
| Example 7 | 0.0 | 0.0 |
| Example 8 | 0.0 | 0.0 |
| Example 9 | 0.0 | 0.0 |
| Example 10 | 0.0 | 0.0 |
| Example 11 | 0.0 | 0.0 |
| Comparative Example 1 | 0.0 | 0.0 |
| Comparative Example 2 | 0.0 | 0.0 |
| Comparative Example 3 | 0.0 | 0.0 |
| Comparative Example 4 | 0.0 | 0.0 |
| Comparative Example 5 | 0.0 | 0.0 |
| Comparative Example 6 | 1.4 | 0.021 |
| Comparative Example 7 | 13.6 | 0.084 |

Table 7

| Examples | Production of magnetic coating composition | |
| --- | --- | --- |
| | Kind of black plate-shaped ferrite composite particles with magnetoplumbite structure | Weight ratio of magnetic particles to resin (-) |
| Example 12 | Example 7 | 5.0 |
| Example 13 | Example 8 | 5.0 |
| Example 14 | Example 9 | 5.0 |
| Example 15 | Example 10 | 5.0 |
| Example 16 | Example 11 | 5.0 |
| Example 17 | Example 7 | 5.0 |
| Example 18 | Example 9 | 5.0 |
| Example 19 | Example 11 | 5.0 |

Table 7 (continued)

| Examples | Production of magnetic coating composition | Properties of magnetic coating composition |
|---|---|---|
| | Amount of carbon black added (ratio to magnetic particles) (-) (part by weight) | Viscosity (cP) |
| Example 12 | 1.0 | 2,560 |
| Example 13 | 1.0 | 3,738 |
| Example 14 | 1.0 | 2,790 |
| Example 15 | 1.0 | 3,866 |
| Example 16 | 1.0 | 3,994 |
| Example 17 | 0.0 | 2,944 |
| Example 18 | 2.5 | 2,816 |
| Example 19 | 1.5 | 3,891 |

Table 7 (continued)

| Examples | Properties of magnetic recording medium | | | |
|---|---|---|---|---|
| | Thickness of magnetic layer (μm) | Coercive force value (Oe) | Br/Bm value (-) | Gloss (%) |
| Example 12 | 3.5 | 1,728 | 0.89 | 180 |
| Example 13 | 3.6 | 2,626 | 0.88 | 186 |
| Example 14 | 3.4 | 1,732 | 0.89 | 181 |
| Example 15 | 3.5 | 2,630 | 0.88 | 189 |
| Example 16 | 3.6 | 2,626 | 0.88 | 193 |
| Example 17 | 3.5 | 1,732 | 0.90 | 188 |
| Example 18 | 3.6 | 1,742 | 0.89 | 182 |
| Example 19 | 3.6 | 2,646 | 0.88 | 190 |

Table 7 (continued)

| Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Example 12 | 8.3 | 143 | 1.48 | $1.4 \times 10^8$ |
| Example 13 | 6.9 | 136 | 1.35 | $6.6 \times 10^8$ |
| Example 14 | 8.8 | 142 | 1.49 | $2.8 \times 10^8$ |
| Example 15 | 6.9 | 135 | 1.41 | $2.1 \times 10^9$ |
| Example 16 | 7.2 | 137 | 1.32 | $8.3 \times 10^8$ |
| Example 17 | 7.6 | 144 | 1.51 | $1.6 \times 10^9$ |
| Example 18 | 8.9 | 144 | 1.59 | $1.0 \times 10^8$ |
| Example 19 | 8.0 | 136 | 1.36 | $6.9 \times 10^8$ |

Table 8

| Comparative Examples | Production of magnetic coating composition | |
|---|---|---|
| | Kind of plate-shaped ferrite composite particles with magnetoplumbite structure | Weight ratio of magnetic particles to resin (-) |
| Comparative Example 8 | Core particles 1 | 5.0 |
| Comparative Example 9 | Core particles 2 | 5.0 |
| Comparative Example 10 | Comparative Example 1 | 5.0 |
| Comparative Example 11 | Comparative Example 2 | 5.0 |
| Comparative Example 12 | Comparative Example 3 | 5.0 |
| Comparative Example 13 | Comparative Example 4 | 5.0 |
| Comparative Example 14 | Comparative Example 5 | 5.0 |
| Comparative Example 15 | Comparative Example 6 | 5.0 |
| Comparative Example 16 | Comparative Example 7 | 5.0 |
| Comparative Example 17 | Core particles 1 | 5.0 |
| Comparative Example 18 | Core particles 1 | 5.0 |
| Comparative Example 19 | Core particles 2 | 5.0 |
| Comparative Example 20 | Core particles 2 | 5.0 |

Table 8 (continued)

| Comparative Examples | Production of magnetic coating composition | Properties of magnetic coating composition |
|---|---|---|
| | Amount of carbon black added (ratio to magnetic particles) (-) | Viscosity (cP) |
| Comparative Example 8 | 1.0 | 2,048 |
| Comparative Example 9 | 1.0 | 2,816 |
| Comparative Example 10 | 1.0 | 5,888 |
| Comparative Example 11 | 1.0 | 2,048 |
| Comparative Example 12 | 1.0 | 2,816 |
| Comparative Example 13 | 1.0 | 4,122 |
| Comparative Example 14 | 1.0 | 3,866 |
| Comparative Example 15 | 1.0 | 3,328 |
| Comparative Example 16 | 1.0 | 6,016 |
| Comparative Example 17 | 5.5 | 6,477 |
| Comparative Example 18 | 10.0 | 5,632 |
| Comparative Example 19 | 5.5 | 11,008 |
| Comparative Example 20 | 10.0 | 10,240 |

Table 8 (continued)

| Comparative Examples | Properties of magnetic recording medium | | | |
|---|---|---|---|---|
| | Thickness of magnetic layer (μm) | Coercive force value (Oe) | Br/Bm value (-) | Gloss (%) |
| Comparative Example 8 | 3.5 | 1,710 | 0.84 | 160 |
| Comparative Example 9 | 3.5 | 2,597 | 0.80 | 163 |
| Comparative Example 10 | 3.5 | 1,713 | 0.76 | 163 |
| Comparative Example 11 | 3.5 | 1,705 | 0.78 | 158 |
| Comparative Example 12 | 3.4 | 2,601 | 0.78 | 163 |
| Comparative Example 13 | 3.6 | 2,611 | 0.73 | 161 |
| Comparative Example 14 | 3.5 | 1,715 | 0.75 | 142 |
| Comparative Example 15 | 3.5 | 738 | 0.78 | 150 |
| Comparative Example 16 | 3.6 | 698 | 0.76 | 145 |
| Comparative Example 17 | 3.7 | 1,726 | 0.83 | 164 |
| Comparative Example 18 | 3.7 | 1,703 | 0.79 | 131 |
| Comparative Example 19 | 3.8 | 2,603 | 0.81 | 168 |
| Comparative Example 20 | 3.6 | 2,608 | 0.72 | 140 |

Table 8 (continued)

| Comparative Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Comparative Example 8 | 14.6 | 133 | 0.62 | $6.2 \times 10^{13}$ |
| Comparative Example 9 | 13.6 | 116 | 0.52 | $2.2 \times 10^{13}$ |
| Comparative Example 10 | 13.2 | 131 | 1.13 | $4.1 \times 10^{11}$ |
| Comparative Example 11 | 14.3 | 130 | 0.64 | $8.3 \times 10^{11}$ |
| Comparative Example 12 | 12.8 | 121 | 0.63 | $6.5 \times 10^{11}$ |
| Comparative Example 13 | 12.9 | 119 | 1.18 | $7.1 \times 10^{10}$ |
| Comparative Example 14 | 36.8 | 134 | 1.13 | $4.4 \times 10^{11}$ |
| Comparative Example 15 | 21.3 | 133 | 1.10 | $8.6 \times 10^{10}$ |
| Comparative Example 16 | 31.2 | 130 | 0.98 | $5.4 \times 10^{10}$ |
| Comparative Example 17 | 14.4 | 133 | 1.26 | $9.1 \times 10^{10}$ |
| Comparative Example 18 | 36.8 | 116 | 1.40 | $5.7 \times 10^{9}$ |
| Comparative Example 19 | 12.0 | 110 | 1.10 | $7.1 \times 10^{10}$ |
| Comparative Example 20 | 41.6 | 98 | 1.36 | $5.5 \times 10^{9}$ |

Table 9

| Examples and Comparative Examples | Kind of core particles | Production of black plate-shaped ferrite composite particles with magnetoplumbite structure | |
|---|---|---|---|
| | | Coating with polysiloxane | |
| | | Polysiloxane | |
| | | Kind | Amount added (part by weight) |
| Example 20 | Core particles 1 | TSF484 | 1.0 |
| Example 21 | Core particles 2 | TSF484 | 5.0 |
| Example 22 | Core particles 3 | KF99 | 2.0 |
| Example 23 | Core particles 4 | L-9000 | 1.0 |
| Example 24 | Core particles 5 | TSF484/L-45 | 0.5/1.5 |
| Comparative Example 21 | Core particles 1 | TSF484 | 1.0 |
| Comparative Example 22 | Core particles 2 | TSF484 | 0.5 |
| Comparative Example 23 | Core particles 2 | TSF484 | 0.005 |

Table 9 (continued)

| Examples and Comparative Examples | Production of black plate-shaped ferrite composite particles with magnetoplumbite structure | | |
|---|---|---|---|
| | Coating with polysiloxane | | |
| | Edge runner treatment | | Coating amount (calculated as Si) (wt. %) |
| | Linear load (Kg/cm) | Time (min) | |
| Example 20 | 60 | 30 | 0.43 |
| Example 21 | 30 | 30 | 2.12 |
| Example 22 | 60 | 20 | 0.85 |
| Example 23 | 30 | 45 | 0.43 |
| Example 24 | 60 | 30 | 0.70 |
| Comparative Example 21 | 60 | 20 | 0.44 |
| Comparative Example 22 | 60 | 30 | 0.22 |
| Comparative Example 23 | 60 | 30 | $2 \times 10^{-3}$ |

Table 9 (continued)

| Examples and Comparative Examples | Production of black plate-shaped ferrite composite particles with magnetoplumbite structure | |
|---|---|---|
| | Adhesion of carbon black fine particles | |
| | Carbon black | |
| | Kind | Amount added (part by weight) |
| Example 20 | A | 10.0 |
| Example 21 | A | 3.0 |
| Example 22 | A | 5.0 |
| Example 23 | B | 10.0 |
| Example 24 | C | 7.5 |
| Comparative Example 21 | - | - |
| Comparative Example 22 | A | 0.01 |
| Comparative Example 23 | B | 3.0 |

Note: A: Carbon black A described in Table 4.
B: Carbon black B described in Table 4.
C: Carbon black C described in Table 4.

Table 9 (continued)

| Examples and Comparative Examples | Production of black plate-shaped ferrite composite particles with magnetoplumbite structure | | |
|---|---|---|---|
| | Adhesion of carbon black fine particles | | |
| | Edge runner treatment | | Amount adhered (calculated as C) (wt. %) |
| | Linear load (Kg/cm) | Time (min) | |
| Example 20 | 60 | 30 | 9.08 |
| Example 21 | 45 | 45 | 2.90 |
| Example 22 | 45 | 20 | 4.76 |
| Example 23 | 30 | 45 | 9.09 |
| Example 24 | 60 | 20 | 6.95 |
| Comparative Example 21 | - | - | - |
| Comparative Example 22 | 60 | 30 | 0.01 |
| Comparative Example 23 | 60 | 30 | 2.91 |

Table 10

| Examples and Comparative Examples | Properties of black plate-shaped ferrite composite particles with magnetoplumbite structure | | | |
|---|---|---|---|---|
| | Average particle size (µm) | Average thickness (µm) | Plate ratio (-) | Geometrical standard deviation value (-) |
| Example 20 | 0.050 | 0.012 | 4.2:1 | 1.35 |
| Example 21 | 0.032 | 0.009 | 3.6:1 | 1.41 |
| Example 22 | 0.050 | 0.012 | 4.2:1 | 1.35 |
| Example 23 | 0.032 | 0.009 | 3.6:1 | 1.40 |
| Example 24 | 0.032 | 0.010 | 3.2:1 | 1.40 |
| Comparative Example 21 | 0.050 | 0.012 | 4.2:1 | 1.36 |
| Comparative Example 22 | 0.032 | 0.009 | 3.6:1 | - |
| Comparative Example 23 | 0.032 | 0.009 | 3.6:1 | - |

Table 10 (continued)

| Examples and Comparative Examples | Properties of black plate-shaped ferrite composite particles with magnetoplumbite structure | | |
|---|---|---|---|
| | BET specific surface area value ($m^2/g$) | Coercive force value (Oe) | Saturation magnetization value (emu/g) |
| Example 20 | 45.9 | 1,712 | 52.9 |
| Example 21 | 59.2 | 2,583 | 48.1 |
| Example 22 | 44.9 | 1,710 | 51.3 |
| Example 23 | 58.9 | 2,576 | 48.0 |
| Example 24 | 60.3 | 2,583 | 47.9 |
| Comparative Example 21 | 48.1 | 1,711 | 53.9 |
| Comparative Example 22 | 57.6 | 2,581 | 49.3 |
| Comparative Example 23 | 63.0 | 2,580 | 48.6 |

Table 10 (continued)

| Examples and Comparative Examples | Properties of black plate-shaped ferrite composite particles with magnetoplumbite structure | | |
|---|---|---|---|
| | Volume resistivity value (Ω·cm) | Blackness (L* value) (-) | Carbon black desorption percentage (%) |
| Example 20 | $4.4 \times 10^6$ | 22.0 | 4.1 |
| Example 21 | $9.6 \times 10^6$ | 24.3 | 3.8 |
| Example 22 | $1.9 \times 10^6$ | 21.6 | 1.9 |
| Example 23 | $4.2 \times 10^6$ | 24.2 | 7.4 |
| Example 24 | $2.1 \times 10^6$ | 24.1 | 1.9 |
| Comparative Example 21 | $7.0 \times 10^9$ | 33.3 | - |
| Comparative Example 22 | $2.9 \times 10^9$ | 30.6 | - |
| Comparative Example 23 | $8.4 \times 10^7$ | 29.1 | 44.4 |

Table 10 (continued)

| Examples and Comparative Examples | Properties of black plate-shaped ferrite composite particles with magnetoplumbite structure | |
|---|---|---|
| | Percentage of change in coercive force value (%) | $Fe^{2+}/Fe^{3+}$ (-) |
| Example 20 | 0.0 | 0.0 |
| Example 21 | 0.0 | 0.0 |
| Example 22 | 0.0 | 0.0 |
| Example 23 | 0.0 | 0.0 |
| Example 24 | 0.0 | 0.0 |
| Comparative Example 21 | 0.0 | 0.0 |
| Comparative Example 22 | 0.0 | 0.0 |
| Comparative Example 23 | 0.0 | 0.0 |

Table 11

| Examples and Comparative Examples | Kind of core particles | Production of black plate-shaped ferrite composite particles with magnetoplumbite structure | |
|---|---|---|---|
| | | Coating with modified polysiloxane | |
| | | Modified polysiloxane | |
| | | Kind | Amount added (part by weight) |
| Example 25 | Core particles 1 | BYK-080 | 1.0 |
| Example 26 | Core particles 2 | BYK-310 | 2.0 |
| Example 27 | Core particles 3 | BYK-222 | 5.0 |
| Example 28 | Core particles 4 | TSF4446 | 1.0 |
| Example 29 | Core particles 5 | YF3965 | 1.0 |
| Comparative Example 24 | Core particles 1 | BYK-080 | 1.0 |
| Comparative Example 25 | Core particles 2 | BYK-080 | 0.5 |
| Comparative Example 26 | Core particles 2 | BYK-080 | 0.005 |

Table 11 (continued)

| Examples and Comparative Examples | Production of black plate-shaped ferrite composite particles with magnetoplumbite structure | | |
|---|---|---|---|
| | Coating with modified polysiloxane | | |
| | Edge runner treatment | | Coating amount (calculated as Si) (wt. %) |
| | Linear load (Kg/cm) | Time (min) | |
| Example 25 | 60 | 20 | 0.18 |
| Example 26 | 30 | 30 | 0.33 |
| Example 27 | 60 | 30 | 0.86 |
| Example 28 | 45 | 30 | 0.17 |
| Example 29 | 60 | 20 | 0.16 |
| Comparative Example 24 | 30 | 30 | 0.17 |
| Comparative Example 25 | 60 | 30 | 0.08 |
| Comparative Example 26 | 45 | 30 | $6 \times 10^{-4}$ |

Table 11 (continued)

| Examples and Comparative Examples | Production of black plate-shaped ferrite composite particles with magnetoplumbite structure | |
|---|---|---|
| | Adhesion of carbon black fine particles | |
| | Carbon black | |
| | Kind | Amount added (part by weight) |
| Example 25 | A | 7.5 |
| Example 26 | A | 5.0 |
| Example 27 | A | 10.0 |
| Example 28 | B | 10.0 |
| Example 29 | C | 5.0 |
| Comparative Example 24 | - | - |
| Comparative Example 25 | A | 0.01 |
| Comparative Example 26 | B | 5.0 |

Note: A: Carbon black A described in Table 4.
B: Carbon black B described in Table 4.
C: Carbon black C described in Table 4.

Table 11 (continued)

| Examples and Comparative Examples | Production of black plate-shaped ferrite composite particles with magnetoplumbite structure | | |
|---|---|---|---|
| | Adhesion of carbon black fine particles | | |
| | Edge runner treatment | | Amount adhered (calculated as C) (wt. %) |
| | Linear load (Kg/cm) | Time (min) | |
| Example 25 | 60 | 30 | 6.96 |
| Example 26 | 45 | 30 | 4.76 |
| Example 27 | 30 | 45 | 9.09 |
| Example 28 | 60 | 45 | 9.08 |
| Example 29 | 60 | 30 | 4.75 |
| Comparative Example 24 | - | - | - |
| Comparative Example 25 | 60 | 30 | 0.01 |
| Comparative Example 26 | 60 | 30 | 4.74 |

Table 12

| Examples and Comparative Examples | Properties of black plate-shaped ferrite composite particles with magnetoplumbite structure | | | |
|---|---|---|---|---|
| | Average particle size (μm) | Average thickness (μm) | Plate ratio (-) | Geometrical standard deviation value (-) |
| Example 25 | 0.050 | 0.012 | 4.2:1 | 1.35 |
| Example 26 | 0.032 | 0.009 | 3.6:1 | 1.40 |
| Example 27 | 0.050 | 0.012 | 4.2:1 | 1.36 |
| Example 28 | 0.032 | 0.009 | 3.6:1 | 1.41 |
| Example 29 | 0.032 | 0.010 | 3.2:1 | 1.40 |
| Comparative Example 24 | 0.050 | 0.012 | 4.2:1 | 1.35 |
| Comparative Example 25 | 0.032 | 0.009 | 3.6:1 | 1.40 |
| Comparative Example 26 | 0.032 | 0.009 | 3.6:1 | 1.40 |

Table 12 (continued)

| Examples and Comparative Examples | Properties of black plate-shaped ferrite composite particles with magnetoplumbite structure | | |
|---|---|---|---|
| | BET specific surface area value ($m^2/g$) | Coercive force value (Oe) | Saturation magnetization value (emu/g) |
| Example 25 | 45.9 | 1,710 | 52.9 |
| Example 26 | 58.9 | 2,588 | 48.5 |
| Example 27 | 46.1 | 1,706 | 51.3 |
| Example 28 | 58.2 | 2,573 | 48.3 |
| Example 29 | 58.0 | 2,584 | 47.9 |
| Comparative Example 24 | 47.1 | 1,705 | 54.1 |
| Comparative Example 25 | 58.3 | 2,580 | 49.2 |
| Comparative Example 26 | 62.1 | 2,578 | 48.4 |

Table 12 (continued)

| Examples and Comparative Examples | Properties of black plate-shaped ferrite composite particles with magnetoplumbite structure | | |
|---|---|---|---|
| | Volume resistivity value (Ω·cm) | Blackness (L* value) (-) | Carbon black desorption percentage (%) |
| Example 25 | $2.1 \times 10^6$ | 22.1 | 4.3 |
| Example 26 | $7.6 \times 10^6$ | 23.9 | 4.6 |
| Example 27 | $2.8 \times 10^6$ | 21.4 | 2.2 |
| Example 28 | $6.3 \times 10^6$ | 24.0 | 7.5 |
| Example 29 | $4.1 \times 10^6$ | 23.6 | 3.6 |
| Comparative Example 24 | $9.3 \times 10^7$ | 33.8 | - |
| Comparative Example 25 | $2.4 \times 10^9$ | 30.6 | - |
| Comparative Example 26 | $6.5 \times 10^9$ | 28.4 | 48.3 |

Table 12 (continued)

| Examples and Comparative Examples | Properties of black plate-shaped ferrite composite particles with magnetoplumbite structure | |
|---|---|---|
| | Percentage of change in coercive force value (%) | $Fe^{2+}/Fe^{3+}$ (-) |
| Example 25 | 0.0 | 0.0 |
| Example 26 | 0.0 | 0.0 |
| Example 27 | 0.0 | 0.0 |
| Example 28 | 0.0 | 0.0 |
| Example 29 | 0.0 | 0.0 |
| Comparative Example 24 | 0.0 | 0.0 |
| Comparative Example 25 | 0.0 | 0.0 |
| Comparative Example 26 | 0.0 | 0.0 |

Table 13

| Examples and Comparative Examples | Kind of core particles | Production of black plate-shaped ferrite composite particles with magnetoplumbite structure | |
|---|---|---|---|
| | | Coating with terminal-modified polysiloxane | |
| | | Terminal-modified polysiloxane | |
| | | Kind | Amount added (part by weight) |
| Example 30 | Core particles 1 | TSF4770 | 2.0 |
| Example 31 | Core particles 2 | TSF4770 | 1.0 |
| Example 32 | Core particles 3 | TSF4751 | 0.5 |
| Example 33 | Core particles 4 | XF3905 | 5.0 |
| Example 34 | Core particles 5 | YF3804 | 2.0 |
| Comparative Example 27 | Core particles 1 | TSF4770 | 1.0 |
| Comparative Example 28 | Core particles 2 | TSF4770 | 1.0 |
| Comparative Example 29 | Core particles 2 | TSF4770 | 0.005 |

Table 13 (continued)

| Examples and Comparative Examples | Production of black plate-shaped ferrite composite particles with magnetoplumbite structure | | |
|---|---|---|---|
| | Coating with terminal-modified polysiloxane | | |
| | Edge runner treatment | | Coating amount (calculated as Si) (wt. %) |
| | Linear load (Kg/cm) | Time (min) | |
| Example 30 | 60 | 30 | 0.68 |
| Example 31 | 30 | 45 | 0.34 |
| Example 32 | 60 | 30 | 0.18 |
| Example 33 | 45 | 30 | 1.75 |
| Example 34 | 60 | 20 | 0.40 |
| Comparative Example 27 | 60 | 30 | 0.35 |
| Comparative Example 28 | 60 | 30 | 0.34 |
| Comparative Example 29 | 45 | 30 | $2 \times 10^{-3}$ |

Table 13 (continued)

| Examples and Comparative Examples | Production of black plate-shaped ferrite composite particles with magnetoplumbite structure | |
|---|---|---|
| | Adhesion of carbon black fine particles | |
| | Carbon black | |
| | Kind | Amount added (part by weight) |
| Example 30 | A | 10.0 |
| Example 31 | A | 5.0 |
| Example 32 | A | 7.5 |
| Example 33 | B | 10.0 |
| Example 34 | C | 7.5 |
| Comparative Example 27 | - | - |
| Comparative Example 28 | A | 0.01 |
| Comparative Example 29 | B | 5.0 |

Note: A: Carbon black A described in Table 4.

B: Carbon black B described in Table 4.

C: Carbon black C described in Table 4.

Table 13 (continued)

| Examples and Comparative Examples | Production of black plate-shaped ferrite composite particles with magnetoplumbite structure | | |
|---|---|---|---|
| | Adhesion of carbon black fine particles | | |
| | Edge runner treatment | | Amount adhered (calculated as C) (wt. %) |
| | Linear load (Kg/cm) | Time (min) | |
| Example 30 | 60 | 30 | 9.08 |
| Example 31 | 30 | 60 | 4.76 |
| Example 32 | 45 | 30 | 6.95 |
| Example 33 | 60 | 30 | 9.09 |
| Example 34 | 75 | 20 | 6.97 |
| Comparative Example 27 | - | - | - |
| Comparative Example 28 | 60 | 30 | 0.01 |
| Comparative Example 29 | 60 | 30 | 4.75 |

Table 14

| Examples and Comparative Examples | Properties of black plate-shaped ferrite composite particles with magnetoplumbite structure | | | |
|---|---|---|---|---|
| | Average particle size (µm) | Average thickness (µm) | Plate ratio (-) | Geometrical standard deviation value (-) |
| Example 30 | 0.050 | 0.012 | 4.2:1 | 1.35 |
| Example 31 | 0.032 | 0.009 | 3.6:1 | 1.40 |
| Example 32 | 0.050 | 0.012 | 4.2:1 | 1.36 |
| Example 33 | 0.032 | 0.009 | 3.6:1 | 1.40 |
| Example 34 | 0.032 | 0.010 | 3.2:1 | 1.40 |
| Comparative Example 27 | 0.050 | 0.012 | 4.2:1 | 1.35 |
| Comparative Example 28 | 0.032 | 0.009 | 3.6:1 | 1.40 |
| Comparative Example 29 | 0.032 | 0.009 | 3.6:1 | 1.40 |

Table 14 (continued)

| Examples and Comparative Examples | Properties of black plate-shaped ferrite composite particles with magnetoplumbite structure | | |
|---|---|---|---|
| | BET specific surface area value ($m^2/g$) | Coercive force value (Oe) | Saturation magnetization value (emu/g) |
| Example 30 | 46.4 | 1,714 | 52.9 |
| Example 31 | 59.3 | 2,577 | 48.6 |
| Example 32 | 45.9 | 1,720 | 51.8 |
| Example 33 | 58.9 | 2,576 | 48.5 |
| Example 34 | 59.3 | 2,573 | 48.5 |
| Comparative Example 27 | 47.6 | 1,710 | 54.3 |
| Comparative Example 28 | 58.6 | 2,570 | 49.0 |
| Comparative Example 29 | 62.1 | 2,575 | 48.6 |

Table 14 (continued)

| Examples and Comparative Examples | Properties of black plate-shaped ferrite composite particles with magnetoplumbite structure | | |
|---|---|---|---|
| | Volume resistivity value (Ω·cm) | Blackness ($L^*$ value) (-) | Carbon black desorption percentage (%) |
| Example 30 | $4.1 \times 10^6$ | 22.3 | 3.0 |
| Example 31 | $7.4 \times 10^6$ | 24.0 | 4.9 |
| Example 32 | $3.6 \times 10^6$ | 21.5 | 2.2 |
| Example 33 | $5.1 \times 10^6$ | 23.9 | 8.8 |
| Example 34 | $2.7 \times 10^6$ | 23.6 | 1.6 |
| Comparative Example 27 | $8.3 \times 10^7$ | 33.3 | - |
| Comparative Example 28 | $2.2 \times 10^9$ | 29.9 | - |
| Comparative Example 29 | $6.9 \times 10^9$ | 28.3 | 44.4 |

Table 14 (continued)

| Examples and Comparative Examples | Properties of black plate-shaped ferrite composite particles with magnetoplumbite structure | |
|---|---|---|
| | Percentage of change in coercive force value (%) | $Fe^{2+}/Fe^{3+}$ (-) |
| Example 30 | 0.0 | 0.0 |
| Example 31 | 0.0 | 0.0 |
| Example 32 | 0.0 | 0.0 |
| Example 33 | 0.0 | 0.0 |
| Example 34 | 0.0 | 0.0 |
| Comparative Example 27 | 0.0 | 0.0 |
| Comparative Example 28 | 0.0 | 0.0 |
| Comparative Example 29 | 0.0 | 0.0 |

Table 15

| Examples and Comparative Examples | Production of magnetic coating composition | |
|---|---|---|
| | Kind of black plate-shaped ferrite composite particles with magnetoplumbite structure | Weight ratio of magnetic particles to resin (-) |
| Example 35 | Example 20 | 5.0 |
| Example 36 | Example 21 | 5.0 |
| Example 37 | Example 22 | 5.0 |
| Example 38 | Example 23 | 5.0 |
| Example 39 | Example 24 | 5.0 |
| Example 40 | Example 20 | 5.0 |
| Example 41 | Example 22 | 5.0 |
| Example 42 | Example 24 | 5.0 |
| Comparative Example 30 | Comparative Example 21 | 5.0 |
| Comparative Example 31 | Comparative Example 22 | 5.0 |
| Comparative Example 32 | Comparative Example 23 | 5.0 |

Table 15 (continued)

| Examples and Comparative Examples | Production of magnetic coating composition | Properties of magnetic coating composition |
|---|---|---|
| | Amount of carbon black added (ratio to magnetic particles) (-) | Viscosity (cP) |
| Example 35 | 1.0 | 2,944 |
| Example 36 | 1.0 | 2,790 |
| Example 37 | 1.0 | 2,560 |
| Example 38 | 1.0 | 3,891 |
| Example 39 | 1.0 | 2,560 |
| Example 40 | 0.0 | 2,790 |
| Example 41 | 2.5 | 3,738 |
| Example 42 | 1.5 | 2,790 |
| Comparative Example 30 | 1.0 | 3,815 |
| Comparative Example 31 | 1.0 | 3,738 |
| Comparative Example 32 | 1.0 | 2,920 |

Table 15 (continued)

| Examples and Comparative Examples | Properties of magnetic recording medium | | | |
|---|---|---|---|---|
| | Thickness of magnetic layer (μm) | Coercive force value (Oe) | Br/Bm value (-) | Gloss (%) |
| Example 35 | 3.5 | 1,733 | 0.89 | 183 |
| Example 36 | 3.5 | 2,682 | 0.89 | 185 |
| Example 37 | 3.5 | 1,730 | 0.90 | 181 |
| Example 38 | 3.5 | 2,680 | 0.89 | 181 |
| Example 39 | 3.5 | 2,678 | 0.89 | 183 |
| Example 40 | 3.4 | 1,736 | 0.89 | 191 |
| Example 41 | 3.6 | 1,730 | 0.88 | 186 |
| Example 42 | 3.5 | 2,656 | 0.89 | 183 |
| Comparative Example 30 | 3.5 | 1,712 | 0.78 | 159 |
| Comparative Example 31 | 3.5 | 2,615 | 0.78 | 161 |
| Comparative Example 32 | 3.5 | 2,621 | 0.74 | 162 |

Table 15 (continued)

| Examples and Comparative Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Example 35 | 7.2 | 144 | 1.48 | $2.4 \times 10^8$ |
| Example 36 | 6.8 | 135 | 1.36 | $7.6 \times 10^8$ |
| Example 37 | 7.9 | 143 | 1.49 | $3.1 \times 10^8$ |
| Example 38 | 8.3 | 136 | 1.42 | $2.8 \times 10^9$ |
| Example 39 | 7.9 | 135 | 1.56 | $9.1 \times 10^8$ |
| Example 40 | 6.0 | 141 | 1.41 | $3.3 \times 10^8$ |
| Example 41 | 8.4 | 143 | 1.58 | $1.6 \times 10^8$ |
| Example 42 | 7.9 | 136 | 1.51 | $7.1 \times 10^8$ |
| Comparative Example 30 | 14.2 | 130 | 0.63 | $9.2 \times 10^{11}$ |
| Comparative Example 31 | 13.2 | 125 | 0.62 | $7.3 \times 10^{11}$ |
| Comparative Example 32 | 13.3 | 121 | 1.13 | $7.1 \times 10^{10}$ |

Table 16

| Examples and Comparative Examples | Production of magnetic coating composition | |
|---|---|---|
| | Kind of black plate-shaped ferrite composite particles with magnetoplumbite structure | Weight ratio of magnetic particles to resin (-) |
| Example 43 | Example 25 | 5.0 |
| Example 44 | Example 26 | 5.0 |
| Example 45 | Example 27 | 5.0 |
| Example 46 | Example 28 | 5.0 |
| Example 47 | Example 29 | 5.0 |
| Example 48 | Example 25 | 5.0 |
| Example 49 | Example 27 | 5.0 |
| Example 50 | Example 29 | 5.0 |
| Comparative Example 33 | Comparative Example 24 | 5.0 |
| Comparative Example 34 | Comparative Example 25 | 5.0 |
| Comparative Example 35 | Comparative Example 26 | 5.0 |

Table 16 (continued)

| Examples and Comparative Examples | Production of magnetic coating composition | Properties of magnetic coating composition |
|---|---|---|
| | Amount of carbon black added (ratio to magnetic particles) (-) | Viscosity (cP) |
| Example 43 | 1.0 | 3,891 |
| Example 44 | 1.0 | 2,790 |
| Example 45 | 1.0 | 3,866 |
| Example 46 | 1.0 | 3,738 |
| Example 47 | 1.0 | 2,944 |
| Example 48 | 0.0 | 2,560 |
| Example 49 | 2.5 | 3,891 |
| Example 50 | 1.5 | 2,816 |
| Comparative Example 33 | 1.0 | 2,790 |
| Comparative Example 34 | 1.0 | 2,944 |
| Comparative Example 35 | 1.0 | 2,560 |

Table 16 (continued)

| Examples and Comparative Examples | Properties of magnetic recording medium | | | |
|---|---|---|---|---|
| | Thickness of magnetic layer (μm) | Coercive force value (Oe) | Br/Bm value (-) | Gloss (%) |
| Example 43 | 3.5 | 1,732 | 0.90 | 184 |
| Example 44 | 3.5 | 2,670 | 0.89 | 186 |
| Example 45 | 3.4 | 1,728 | 0.90 | 188 |
| Example 46 | 3.5 | 2,691 | 0.89 | 181 |
| Example 47 | 3.5 | 2,683 | 0.89 | 183 |
| Example 48 | 3.5 | 1,733 | 0.90 | 189 |
| Example 49 | 3.6 | 1,729 | 0.88 | 182 |
| Example 50 | 3.5 | 2,661 | 0.89 | 184 |
| Comparative Example 33 | 3.5 | 1,713 | 0.76 | 158 |
| Comparative Example 34 | 3.6 | 2,613 | 0.76 | 163 |
| Comparative Example 35 | 3.5 | 2,631 | 0.74 | 162 |

Table 16 (continued)

| Examples and Comparative Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Example 43 | 7.8 | 142 | 1.46 | $6.7 \times 10^8$ |
| Example 44 | 7.2 | 136 | 1.38 | $3.1 \times 10^8$ |
| Example 45 | 7.0 | 142 | 1.46 | $3.2 \times 10^9$ |
| Example 46 | 8.4 | 135 | 1.39 | $6.9 \times 10^8$ |
| Example 47 | 8.0 | 137 | 1.53 | $8.1 \times 10^8$ |
| Example 48 | 6.9 | 143 | 1.39 | $1.4 \times 10^9$ |
| Example 49 | 8.0 | 142 | 1.56 | $2.2 \times 10^8$ |
| Example 50 | 7.6 | 135 | 1.51 | $7.3 \times 10^8$ |
| Comparative Example 33 | 14.4 | 129 | 0.71 | $9.3 \times 10^{11}$ |
| Comparative Example 34 | 13.3 | 123 | 0.68 | $6.6 \times 10^{11}$ |
| Comparative Example 35 | 13.2 | 123 | 1.11 | $8.3 \times 10^{10}$ |

Table 17

| Examples and Comparative Examples | Production of magnetic coating composition | |
|---|---|---|
| | Kind of black plate-shaped ferrite composite particles with magnetoplumbite structure | Weight ratio of magnetic particles to resin (-) |
| Example 51 | Example 30 | 5.0 |
| Example 52 | Example 31 | 5.0 |
| Example 53 | Example 32 | 5.0 |
| Example 54 | Example 33 | 5.0 |
| Example 55 | Example 34 | 5.0 |
| Example 56 | Example 30 | 5.0 |
| Example 57 | Example 32 | 5.0 |
| Example 58 | Example 34 | 5.0 |
| Comparative Example 36 | Comparative Example 27 | 5.0 |
| Comparative Example 37 | Comparative Example 28 | 5.0 |
| Comparative Example 38 | Comparative Example 29 | 5.0 |

Table 17 (continued)

| Examples and Comparative Examples | Production of magnetic coating composition | Properties of magnetic coating composition |
|---|---|---|
| | Amount of carbon black added (ratio to magnetic particles) (-) | Viscosity (cP) |
| Example 51 | 1.0 | 2,790 |
| Example 52 | 1.0 | 2,944 |
| Example 53 | 1.0 | 2,560 |
| Example 54 | 1.0 | 3,891 |
| Example 55 | 1.0 | 2,790 |
| Example 56 | 0.0 | 2,944 |
| Example 57 | 2.5 | 2,944 |
| Example 58 | 1.5 | 3,891 |
| Comparative Example 36 | 1.0 | 3,891 |
| Comparative Example 37 | 1.0 | 2,790 |
| Comparative Example 38 | 1.0 | 3,328 |

Table 17 (continued)

| Examples and Comparative Examples | Properties of magnetic recording medium | | | |
|---|---|---|---|---|
| | Thickness of magnetic layer (μm) | Coercive force value (Oe) | Br/Bm value (-) | Gloss (%) |
| Example 51 | 3.4 | 1,736 | 0.88 | 190 |
| Example 52 | 3.5 | 2,689 | 0.89 | 183 |
| Example 53 | 3.5 | 1,741 | 0.90 | 186 |
| Example 54 | 3.5 | 2,700 | 0.89 | 185 |
| Example 55 | 3.5 | 2,686 | 0.89 | 188 |
| Example 56 | 3.5 | 1,734 | 0.91 | 189 |
| Example 57 | 3.5 | 1,735 | 0.89 | 181 |
| Example 58 | 3.5 | 2,668 | 0.90 | 183 |
| Comparative Example 36 | 3.4 | 1,713 | 0.78 | 160 |
| Comparative Example 37 | 3.5 | 2,615 | 0.78 | 163 |
| Comparative Example 38 | 3.5 | 2,618 | 0.76 | 160 |

Table 17 (continued)

| Examples and Comparative Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Example 51 | 6.4 | 145 | 1.44 | $9.3 \times 10^8$ |
| Example 52 | 8.1 | 136 | 1.32 | $2.2 \times 10^8$ |
| Example 53 | 7.7 | 144 | 1.48 | $3.6 \times 10^8$ |
| Example 54 | 7.8 | 136 | 1.45 | $1.4 \times 10^9$ |
| Example 55 | 7.5 | 136 | 1.51 | $9.6 \times 10^8$ |
| Example 56 | 7.0 | 144 | 1.44 | $1.8 \times 10^8$ |
| Example 57 | 8.1 | 144 | 1.61 | $1.1 \times 10^9$ |
| Example 58 | 7.6 | 135 | 1.52 | $7.3 \times 10^8$ |
| Comparative Example 36 | 14.4 | 130 | 0.68 | $9.3 \times 10^{11}$ |
| Comparative Example 37 | 14.0 | 125 | 0.65 | $6.6 \times 10^{11}$ |
| Comparative Example 38 | 13.6 | 125 | 1.13 | $8.3 \times 10^{10}$ |

Table 18

| Examples and Comparative Examples | Kind of core particles | Production of black plate-shaped ferrite composite particles with magnetoplumbite structure | |
|---|---|---|---|
| | | Coating with fluoroalkylsilane compound | |
| | | Fluoroalkylsilane compound | |
| | | Kind | Amount added (part by weight) |
| Example 59 | Core particles 1 | Tridecafluorooctyl trimethoxysilane | 2.0 |
| Example 60 | Core particles 2 | Heptadecafluorodecyl trimethoxysilane | 4.0 |
| Example 61 | Core particles 3 | Trifluoropropyl trimethoxysilane | 3.0 |
| Example 62 | Core particles 4 | Tridecafluorooctyl trimethoxysilane | 1.0 |
| Example 63 | Core particles 5 | Heptadecafluorodecyl trimethoxysilane | 5.0 |
| Comparative Example 39 | Core particles 1 | Tridecafluorooctyl trimethoxysilane | 1.0 |
| Comparative Example 40 | Core particles 2 | Tridecafluorooctyl trimethoxysilane | 0.5 |
| Comparative Example 41 | Core particles 2 | Tridecafluorooctyl trimethoxysilane | 0.005 |

Table 18 (continued)

| Examples and Comparative Examples | Production of black plate-shaped ferrite composite particles with magnetoplumbite structure | | |
|---|---|---|---|
| | Coating with fluoroalkylsilane compound | | |
| | Edge runner treatment | | Coating amount (calculated as Si) (wt. %) |
| | Linear load (Kg/cm) | Time (min) | |
| Example 59 | 60 | 30 | 0.11 |
| Example 60 | 45 | 30 | 0.19 |
| Example 61 | 30 | 45 | 0.37 |
| Example 62 | 60 | 30 | 0.06 |
| Example 63 | 45 | 30 | 0.23 |
| Comparative Example 39 | 60 | 30 | 0.06 |
| Comparative Example 40 | 60 | 30 | 0.03 |
| Comparative Example 41 | 60 | 30 | $3 \times 10^{-4}$ |

Table 18 (continued)

| Examples and Comparative Examples | Production of black plate-shaped ferrite composite particles with magnetoplumbite structure | |
|---|---|---|
| | Deposition of carbon black fine particles | |
| | Carbon black | |
| | Kind | Amount added (part by weight) |
| Example 59 | A | 7.5 |
| Example 60 | A | 5.0 |
| Example 61 | A | 5.0 |
| Example 62 | B | 10.0 |
| Example 63 | C | 10.0 |
| Comparative Example 39 | - | - |
| Comparative Example 40 | A | 0.01 |
| Comparative Example 41 | B | 5.0 |

Table 18 (continued)

| Examples and Comparative Examples | Production of black plate-shaped ferrite composite particles with magnetoplumbite structure | | |
|---|---|---|---|
| | Deposition of carbon black fine particles | | |
| | Edge runner treatment | | Amount deposited (calculated as C) (wt. %) |
| | Linear load (Kg/cm) | Time (min) | |
| Example 59 | 60 | 20 | 6.96 |
| Example 60 | 45 | 45 | 4.75 |
| Example 61 | 30 | 30 | 4.74 |
| Example 62 | 60 | 20 | 9.08 |
| Example 63 | 45 | 30 | 9.07 |
| Comparative Example 39 | - | - | - |
| Comparative Example 40 | 60 | 30 | 0.01 |
| Comparative Example 41 | 60 | 30 | 4.75 |

Table 19

| Examples and Comparative Examples | Properties of black plate-shaped ferrite composite particles with magnetoplumbite structure | | | |
|---|---|---|---|---|
| | Average particle size (µm) | Average thickness (µm) | Plate ratio (-) | Geometrical standard deviation value (-) |
| Example 59 | 0.050 | 0.012 | 4.2:1 | 1.35 |
| Example 60 | 0.032 | 0.009 | 3.6:1 | 1.40 |
| Example 61 | 0.050 | 0.012 | 4.2:1 | 1.35 |
| Example 62 | 0.032 | 0.009 | 3.6:1 | 1.40 |
| Example 63 | 0.032 | 0.010 | 3.2:1 | 1.40 |
| Comparative Example 39 | 0.050 | 0.012 | 4.2:1 | 1.35 |
| Comparative Example 40 | 0.032 | 0.009 | 3.6:1 | - |
| Comparative Example 41 | 0.032 | 0.009 | 3.6:1 | - |

Table 19 (continued)

| Examples and Comparative Examples | Properties of black plate-shaped ferrite composite particles with magnetoplumbite structure | | |
|---|---|---|---|
| | BET specific surface area value ($m^2/g$) | Coercive force value (Oe) | Saturation magnetization value (emu/g) |
| Example 59 | 46.1 | 1,711 | 53.0 |
| Example 60 | 59.1 | 2,586 | 48.6 |
| Example 61 | 45.5 | 1,713 | 51.6 |
| Example 62 | 58.6 | 2,577 | 48.3 |
| Example 63 | 59.1 | 2,588 | 48.1 |
| Comparative Example 39 | 47.3 | 1,708 | 54.3 |
| Comparative Example 40 | 58.3 | 2,584 | 49.1 |
| Comparative Example 41 | 62.1 | 2,583 | 48.3 |

Table 19 (continued)

| Examples and Comparative Examples | Properties of black plate-shaped ferrite composite particles with magnetoplumbite structure | | |
|---|---|---|---|
| | Volume resistivity value ($\Omega\cdot cm$) | Blackness (L* value) (-) | Carbon black desorption percentage (%) |
| Example 59 | $2.6 \times 10^6$ | 22.2 | 3.9 |
| Example 60 | $7.9 \times 10^6$ | 24.1 | 4.8 |
| Example 61 | $1.3 \times 10^6$ | 21.2 | 1.6 |
| Example 62 | $6.1 \times 10^6$ | 24.1 | 6.9 |
| Example 63 | $2.8 \times 10^6$ | 23.8 | 2.3 |
| Comparative Example 39 | $7.6 \times 10^9$ | 33.6 | - |
| Comparative Example 40 | $1.2 \times 10^9$ | 30.1 | - |
| Comparative Example 41 | $6.5 \times 10^7$ | 28.5 | 46.3 |

Table 19 (continued)

| Examples and Comparative Examples | Properties of black plate-shaped ferrite composite particles with magnetoplumbite structure | |
|---|---|---|
| | Percentage of change in coercive force value (%) | $Fe^{2+}/Fe^{3+}$ (-) |
| Example 59 | 0.0 | 0.0 |
| Example 60 | 0.0 | 0.0 |
| Example 61 | 0.0 | 0.0 |
| Example 62 | 0.0 | 0.0 |
| Example 63 | 0.0 | 0.0 |
| Comparative Example 39 | 0.0 | 0.0 |
| Comparative Example 40 | 0.0 | 0.0 |
| Comparative Example 41 | 0.0 | 0.0 |

Table 20

| Examples and Comparative Examples | Production of magnetic coating composition | |
|---|---|---|
| | Kind of black plate-shaped ferrite composite particles with magnetoplumbite structure | Weight ratio of magnetic particles to resin (-) |
| Example 64 | Example 59 | 5.0 |
| Example 65 | Example 60 | 5.0 |
| Example 66 | Example 61 | 5.0 |
| Example 67 | Example 62 | 5.0 |
| Example 68 | Example 63 | 5.0 |
| Example 69 | Example 59 | 5.0 |
| Example 70 | Example 61 | 5.0 |
| Example 71 | Example 63 | 5.0 |
| Comparative Example 42 | Comparative Example 39 | 5.0 |
| Comparative Example 43 | Comparative Example 40 | 5.0 |
| Comparative Example 44 | Comparative Example 41 | 5.0 |

Table 20 (continued)

| Examples and Comparative Examples | Production of magnetic coating composition | Properties of magnetic coating composition |
|---|---|---|
| | Amount of carbon black added (ratio to magnetic particles) (-) | Viscosity (cP) |
| Example 64 | 1.0 | 2,790 |
| Example 65 | 1.0 | 3,891 |
| Example 66 | 1.0 | 2,560 |
| Example 67 | 1.0 | 2,944 |
| Example 68 | 1.0 | 2,790 |
| Example 69 | 0.0 | 2,944 |
| Example 70 | 2.5 | 3,738 |
| Example 71 | 1.5 | 3,866 |
| Comparative Example 42 | 1.0 | 2,560 |
| Comparative Example 43 | 1.0 | 3,866 |
| Comparative Example 44 | 1.0 | 2,944 |

Table 20 (continued)

| Examples and Comparative Examples | Properties of magnetic recording medium | | | |
|---|---|---|---|---|
| | Thickness of magnetic layer (μm) | Coercive force value (Oe) | Br/Bm value (-) | Gloss (%) |
| Example 64 | 3.5 | 1,731 | 0.89 | 182 |
| Example 65 | 3.5 | 2,683 | 0.89 | 183 |
| Example 66 | 3.5 | 1,726 | 0.89 | 183 |
| Example 67 | 3.4 | 2,668 | 0.89 | 186 |
| Example 68 | 3.5 | 2,662 | 0.89 | 188 |
| Example 69 | 3.5 | 1,733 | 0.89 | 190 |
| Example 70 | 3.5 | 1,733 | 0.88 | 186 |
| Example 71 | 3.5 | 2,648 | 0.88 | 186 |
| Comparative Example 42 | 3.5 | 1,708 | 0.78 | 158 |
| Comparative Example 43 | 3.6 | 2,613 | 0.78 | 160 |
| Comparative Example 44 | 3.5 | 2,620 | 0.74 | 160 |

Table 20 (continued)

| Examples and Comparative Examples | Properties of magnetic recording medium | | | |
|---|---|---|---|---|
| | Surface roughness Ra (nm) | Young's modulus (relative value) | Linear absorption ($\mu m^{-1}$) | Surface resistivity value ($\Omega$/sq) |
| Example 64 | 7.8 | 144 | 1.48 | $2.2 \times 10^8$ |
| Example 65 | 8.1 | 135 | 1.36 | $7.1 \times 10^8$ |
| Example 66 | 8.3 | 142 | 1.49 | $3.4 \times 10^8$ |
| Example 67 | 8.0 | 135 | 1.42 | $2.8 \times 10^9$ |
| Example 68 | 7.6 | 135 | 1.36 | $9.6 \times 10^8$ |
| Example 69 | 7.2 | 141 | 1.39 | $2.2 \times 10^9$ |
| Example 70 | 8.1 | 143 | 1.58 | $1.3 \times 10^8$ |
| Example 71 | 8.5 | 135 | 1.41 | $8.9 \times 10^8$ |
| Comparative Example 42 | 14.4 | 129 | 0.63 | $7.6 \times 10^{11}$ |
| Comparative Example 43 | 13.9 | 123 | 0.62 | $8.1 \times 10^{11}$ |
| Comparative Example 44 | 13.7 | 120 | 1.15 | $6.5 \times 10^{10}$ |

Example 72

<Production of non-magnetic substrate: Formation of non-magnetic undercoat layer on non-maqnetic base film>

12 g of the spindle-shaped hematite particles (average major axial diameter: 0.151 µm, average minor axial diameter: 0.0228 µm, aspect ratio: 6.6:1, BET specific surface area: 53.4 $m^2/g$, geometrical standard deviation: 1.36) were mixed with a binder resin solution (30 % by weight of vinyl chloride-vinyl acetate copolymer resin having a sodium sulfonate group and 70 % by weight of cyclohexanone) and cyclohexanone, and each of the obtained mixtures (solid content: 72 % by weight) was kneaded by a plast-mill for 30 minutes.

Each of the thus-obtained kneaded material was charged into a 140 ml-glass bottle together with 95 g of 1.5 mmϕ glass beads, a binder resin solution (30 % by weight of polyurethane resin having a sodium sulfonate group and 70 % by weight of a solvent (methyl ethyl ketone : toluene = 1 : 1)), cyclohexanone, methyl ethyl ketone and toluene, and the obtained mixture was mixed and dispersed by a paint shaker for 6 hours to obtain a non-magnetic coating composition. The viscosity of the obtained coating film composition was 435 cP.

The thus-obtained non-magnetic coating composition containing the spindle-shaped hematite particles was as follows:

| | |
|---|---|
| Spindle-shaped hematite particles | 100 parts by weight |
| Vinyl chloride-vinyl acetate copolymer resin having a sodium sulfonate group | 10 parts by weight |
| Polyurethane resin having a sodium sulfonate group | 10 parts by weight |
| Cyclohexanone | 44.6 parts by weight |
| Methylethyl ketone | 111.4 parts by weight |
| Toluene | 66.9 parts by weight |

The non-magnetic coating composition obtained was applied to a polyethylene terephthalate film of 12 µm thick to a thickness of 55 µm by an applicator, and the coating film was then dried, thereby forming a non-magnetic undercoat layer. The thickness of the non-magnetic undercoat layer was 3.5 µm.

The non-magnetic undercoat layer produced from the spindle-shaped hematite particles as the non-magnetic particles had a gloss of 196 %, and a surface roughness Ra of 7.2 nm. The Young's modulus (relative value) thereof was 122.

<Production of magnetic recording medium: Formation of magnetic recording layer>

12 g of the black plate-shaped ferrite composite particles with magnetoplumbite structure obtained in Example 1, 1.2 g of a polishing agent (AKP-50: trade name, produced by Sumitomo Chemical Co., Ltd.), 0.06 g of carbon black (#3250B, trade name, produced by Mitsubishi Chemical Corp.), a binder resin solution (30 % by weight of vinyl chloride-vinyl acetate copolymer resin having a sodium sulfonate group and 70 % by weight of cyclohexanone) and cyclohexanone were mixed to obtain a mixture (solid content: 78 % by weight). The mixture was further kneaded by a plast-mill for 30 minutes to obtain a kneaded material.

The thus-obtained kneaded material was charged into a 140 ml-glass bottle together with 95 g of 1.5 mmϕ glass beads, a binder resin solution (30 % by weight of polyurethane resin having a sodium sulfonate group and 70 % by weight of a solvent (methyl ethyl ketone : toluene = 1 : 1)), cyclohexanone, methyl ethyl ketone and toluene, and the mixture was mixed and dispersed by a paint shaker for 6 hours. Then, the lubricant and hardening agent were added to the mixture, and the resultant mixture was mixed and dispersed by a paint shaker for 15 minutes.

The thus-obtained magnetic coating composition was as follows:

| | |
|---|---|
| Black plate-shaped ferrite composite particles with magnetoplumbite structure | 100 parts by weight |
| Vinyl chloride-vinyl acetate copolymer resin having a sodium sulfonate group | 10 parts by weight |
| Polyurethane resin having a sodium sulfonate group | 10 parts by weight |
| Polishing agent (AKP-50) | 10 parts by weight |
| Carbon black (#3250B) Lubricant (myristic acid: butyl | 1.0 parts by weight |
| stearate = 1 : 2) | 3.0 parts by weight |
| Hardening agent (polyisocyanate) | 5.0 parts by weight |
| Cyclohexanone | 64.9 parts by weight |
| Methyl ethyl ketone | 162.2 parts by weight |

(continued)

| | |
|---|---|
| Toluene | 97.3 parts by weight |

The viscosity of the obtained magnetic coating composition was 2,820 cP.
The magnetic coating composition obtained was applied to the non-magnetic undercoat layer to a thickness of 15 μm by an applicator, and the magnetic recording medium obtained was oriented and dried in a magnetic field, and then calendered. The magnetic recording medium was then subjected to a curing reaction at 60°C for 24 hours, and thereafter slit into a width of 0.5 inch, thereby obtaining a magnetic tape. The thickness of the respective magnetic recording layer was 1.0 μm.
The coercive force value of the magnetic tape produced by forming a magnetic recording layer on the non-magnetic undercoat layer was 2,128 Oe, the squareness (Br/Bm) thereof was 0.89, the gloss thereof was 200 %, the linear absorption coefficient thereof was 1.86 $\mu m^{-1}$, the surface resistivity was $3.6 \times 10^8$ Ω/sq, the surface roughness Ra thereof was 6.6 nm, and the Young's modulus (relative value) thereof was 138.

## Claims

**1.** Black ferrite composite particles having an average particle size of from 0.01 to 0.2 μm, which comprise:

(a) a ferrite particle with magnetoplumbite structure;
(b) a coating on a surface of the particle comprising at least one organosilicon compound selected from:

- an organosilane compound obtainable by drying or heat-treating an alkoxysilane compound;
- a polysiloxane or modified polysiloxane; and
- a fluoroalkyl organosilane compound obtainable by drying or heat-treating a fluoroalkylsilane compound; and

(c) carbon black fine particles having a particle size of from 0.002 to 0.05 μm adhered to the coating, the amount of the carbon black fine particles being from 0.5 to 10% by weight based on the weight of the ferrite particles.

**2.** Composite particles according to claim 1 which additionally have a coat, provided on at least a part of the surface of the composite particles, which comprises at least one hydroxide of aluminum, oxide of aluminum, hydroxide of silicon or oxide of silicon, in an amount of from 0.01 to 20% by weight, calculated as Al or $SiO_2$, based on the total weight of the composite particles.

**3.** Composite particles according to claim 1, wherein the modified polysiloxanes comprise:

(a) a polysiloxane modified with at least one polyether, polyester or epoxy compound; or
(b) a polysiloxane whose molecular terminal has been modified with at least one carboxylic acid group, alcohol group or hydroxyl group.

**4.** Composite particles according to any one of the preceding claims wherein the alkoxysilane compound has the general formula (I):

$$R^1_aSiX_{4-a} \qquad (I)$$

wherein:

- $R^1$ represents $C_6H_5$-, $(CH_3)_2CHCH_2$- or n-$C_bH_{2b+1}$- (where b is an integer from 1 to 18);
- X represents $CH_3O$- or $C_2H_5O$-; and
- a is an integer from 0 to 3.

**5.** Composite particles according to claim 4 wherein the alkoxysilane compound comprises methyl triethoxysilane, dimethyl diethoxysilane, tetraethoxysilane, phenyl triethoxysilane, diphenyl diethoxysilane, methyl trimethoxysilane, dimethyl dimethoxysilane, tetramethoxysilane, phenyl trimethoxysilane, diphenyl dimethoxysilane, isobutyl

trimethoxysilane or decyl trimethoxysilane.

**6.** Composite particles according to any one of the preceding claims wherein the polysiloxane has the general formula (II) :

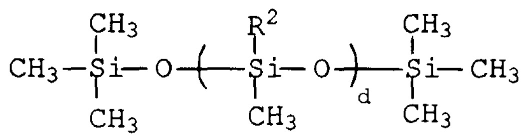

(II)

wherein:

- $R^2$ represents H- or $CH_3$-; and
- d is an integer from 15 to 450.

**7.** Composite particles according to claim 6 wherein the polysiloxane has methyl hydrogen siloxane units.

**8.** Composite particles according to any one of claims 1 to 3 wherein the polysiloxane is modified with at least one polyether, polyester or epoxy compound of the general formulae (III), (IV) or (V):

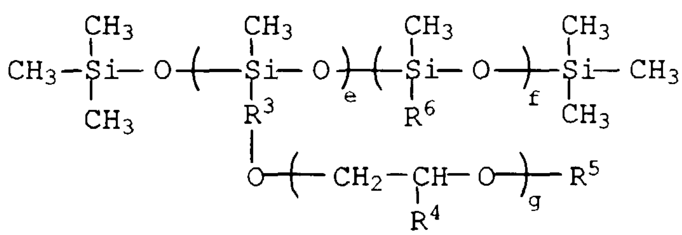

(III)

wherein:

- $R^3$ represents $-(-CH_2-)_h-$ ;
- $R^4$ represents $-(-CH_2-)_i-CH_3$;
- $R^5$ represents -OH, -COOH, $-CH=CH_2$, $-C(CH_3)=CH_2$ or $-(-CH_2-)_j-CH_3$;
- $R^6$ represents $-(-CH_2-)_k-CH_3$;
- g and h are integers from 1 to 15;
- i, j and k are integers from 0 to 15;
- e is an integer from 1 to 50; and
- f is an integer from 1 to 300;

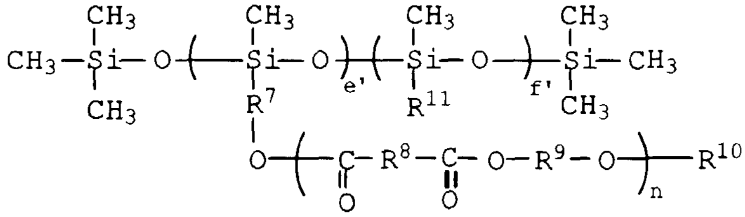

(IV)

wherein:

- $R^7$, $R^8$ and $R^9$ each represent $-(-CH_2-)_q-$ and may be the same or different;

- $R^{10}$ represents -OH, -COOH, -CH=CH$_2$, -C(CH$_3$)=CH$_2$ or -(-CH$_2$-)$_r$-CH$_3$;
- $R^{11}$ represents -(-CH$_2$-)$_s$-CH$_3$;
- n and q are integers from 1 to 15;
- r and s are integers from 0 to 15;
- e' is an integer from 1 to 50; and
- f' is an integer from 1 to 300; or

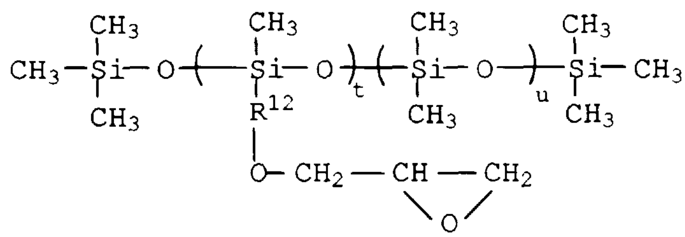

(V)

and

wherein:

- $R^{12}$ represents -(-CH$_2$-)$_v$- and v is an integer from 1 to 15;
- t is an integer from 1 to 50; and
- u is an integer from 1 to 300.

**9.** Composite particles according to claim 3, wherein the polysiloxane whose molecular terminal is modified has the general formula (VI):

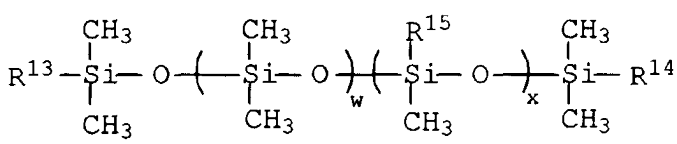

(VI)

wherein:

- $R^{13}$ and $R^{14}$ each represent -OH, $R^{16}$OH or $R^{17}$COOH and may be the same or different;
- $R^{15}$ represents -CH$_3$ or -C$_6$H$_5$;
- $R^{16}$ and $R^{17}$ each represent -(-CH$_2$-)$_y$- and y is an integer from 1 to 15;
- w is an integer from 1 to 200; and
- x is an integer from 0 to 100.

**10.** Composite particles according to any preceding claim, wherein the fluoroalkylsilane compound has the general formula (VII):

$$CF_3(CF_2)_zCH_2CH_2(R^{18})_{a'}SiX_{4-a'} \qquad (VII)$$

wherein:

- $R^{18}$ represents CH$_3$-, C$_2$H$_5$-, CH$_3$O- or C$_2$H$_5$O-;
- X represents CH$_3$O- or C$_2$H$_5$O-;
- z is an integer from 0 to 15; and
- a' is an integer from 0 to 3.

**11.** Composite particles according to any one of the preceding claims wherein the amount of the coating organosilicon compound(s) is from 0.02 to 5.0 % by weight, calculated as Si, based on the total weight of the organosilicon compound(s) and ferrite particles.

**12.** Composite particles according to any one of the preceding claims, which have an average thickness of from 0.001 to 0.05 μm, are plate-shaped and have an average plate ratio (plate surface diameter:thickness) of from 2.0:1 to 20.0:1.

**13.** Composite particles according to any one of the preceding claims, which have a BET specific surface area value of from 30 to 200 $m^2/g$.

**14.** Composite particles according to any one of the preceding claims, which are plate-shaped and have a geometrical standard deviation of the plate surface diameter of from 1.01 to 1.7.

**15.** Composite particles according to any one of the preceding claims, which comprise a volume resistivity of less than $1.0 \times 10^8$ Ω·cm.

**16.** Composite particles according to any one of the preceding claims, which have a blackness (L* value) of from 15 to 27.

**17.** Composite particles according to any one of the preceding claims, which have a coercive force of from 39.8 to 318.3 KA/m (500 to 4000 Oe) and a saturation magnetization value of from 40 to 70 $Am^2kg$ (40 to 70 emu/g).

**18.** A magnetic recording medium comprising:

- a non-magnetic substrate; and
- a magnetic recording layer comprising a binder resin and black ferrite composite particles according to any one of the preceding claims.

**19.** A magnetic recording medium according to claim 18, which has a coercive force of from 39.8 to 318.3 KA/m (500 to 4000 Oe) and a squareness (residual magnetic flux density Br/saturation magnetic flux density Bm) of from 0.82 to 0.95.

**20.** A magnetic recording medium according to claim 18, which has a gloss of from 165 to 300 %, a surface roughness Ra of not more than 12.0 nm, and a linear absorption coefficient of coating film of from 1.20 to 10.0 $\mu m^{-1}$.

**21.** A magnetic recording medium according to claim 18, which has a surface resistivity of not more than $1.0 \times 10^{10}$ Ω/sq.

**22.** A magnetic recording medium according to claim 18, wherein the composite particles have a coat which is provided on at least a part of the surface of the composite particles and which comprises at least one hydroxide of aluminum, oxide of aluminum, hydroxide of silicon or oxide of silicon in an amount of 0.01 to 20 % by weight, calculated as Al or $SiO_2$, based on the total weight of the coated ferrite composite particles.

European Patent Office

# EUROPEAN SEARCH REPORT

Application Number
EP 99 30 6773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 699 721 A (TODA KOGYO CORP) 6 March 1996 (1996-03-06) * page 4, line 54 - line 57; table 13 * | 1 | G11B5/712 C09C1/22 C09C3/00 |
| A | US 4 076 890 A (YAMADA YASUYUKI ET AL) 28 February 1978 (1978-02-28) * claims * | 1 | |
| D,A | PATENT ABSTRACTS OF JAPAN vol. 011, no. 389 (P-648), 19 December 1987 (1987-12-19) & JP 62 154228 A (HITACHI MAXELL LTD), 9 July 1987 (1987-07-09) * abstract * | 1 | |
| D,A | PATENT ABSTRACTS OF JAPAN vol. 016, no. 448 (P-1423), 17 September 1992 (1992-09-17) & JP 04 157615 A (HITACHI MAXELL LTD), 29 May 1992 (1992-05-29) * abstract * | 1 | TECHNICAL FIELDS SEARCHED (Int.Cl.7) |
| D,A | PATENT ABSTRACTS OF JAPAN vol. 014, no. 504 (P-1127), 5 November 1990 (1990-11-05) & JP 02 208821 A (HITACHI MAXELL LTD), 20 August 1990 (1990-08-20) * abstract * | 1 | G11B C09C |
| P,A | EP 0 924 690 A (TODA KOGYO CORP) 23 June 1999 (1999-06-23) * paragraphs '0119!,'0129! * | 1,18 | |
| P,A | EP 0 936 507 A (TODA KOGYO CORP) 18 August 1999 (1999-08-18) * paragraphs '0023!-'0027!; examples * | 1,18 | |
| | -/-- | | |

The present search report has been drawn up for all claims

| Place of search | Date of completion of the search | Examiner |
|---|---|---|
| THE HAGUE | 26 November 1999 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 99 30 6773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,A | EP 0 913 431 A (TODA KOGYO CORP) 6 May 1999 (1999-05-06) * claims 1,13 * | 1 | |
| E | EP 0 957 474 A (TODA KOGYO CORP) 17 November 1999 (1999-11-17) * claims * | 1,18 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 26 November 1999 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 30 6773

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-1999

| Patent document cited in search report | Publication date | Patent family member(s) | Publication date |
|---|---|---|---|
| EP 0699721 A | 06-03-1996 | JP 8120191 A | 14-05-1996 |
| | | US 5686012 A | 11-11-1997 |
| US 4076890 A | 28-02-1978 | JP 1081905 C | 29-01-1982 |
| | | JP 49059608 A | 10-06-1974 |
| | | JP 52040847 B | 14-10-1977 |
| JP 62154228 A | 09-07-1987 | JP 7082636 B | 06-09-1995 |
| JP 04157615 A | 29-05-1992 | NONE | |
| JP 02208821 A | 20-08-1990 | NONE | |
| EP 0924690 A | 23-06-1999 | JP 11242812 A | 07-09-1999 |
| EP 0936507 A | 18-08-1999 | NONE | |
| EP 0913431 A | 06-05-1999 | NONE | |
| EP 0957474 A | 17-11-1999 | NONE | |

EPO FORM P0459

For more details about this annex : see Official Journal of the European Patent Office, No. 12/82